# EUROPÄISCHE PATENTSCHRIFT

(11) **EP 3 791 464 B1**
(45) Veröffentlichungstag und Bekanntmachung des Hinweises auf die Patenterteilung: **17.11.2021**
(21) Anmeldenummer: 20715263.8
(22) Anmeldetag: 28.02.2020
(51) Int. Cl.: H02K 16/02, H02K 16/04, H02K 19/00, H02K 29/06

(54) **GLEICHSTROMMASCHINE**
DC CURRENT MACHINE
MACHINE À COURANT CONTINU

(30) Priorität: 28.02.2019 DE 102019105095
(43) Veröffentlichungstag der Anmeldung: 17.03.2021
(73) Patentinhaber: Michel, Hartmut, 72762 Reutlingen (DE)
(72) Erfinder: Michel, Hartmut, 72762 Reutlingen (DE)
(74) Vertreter: Geitz Truckenmüller Lucht Christ
(86) Internationale Anmeldenummer: PCT/DE2020/100138
(87) Internationale Veröffentlichungsnummer: WO 2020/173526

(56) Entgegenhaltungen:
- WO-A1-2017/194352
- DE-A1- 1 563 003
- DE-A1- 3 629 423
- DE-A1-102010 030 205
- DE-A1-102016 125 140
- JP-A- H0 833 298
- US-A1- 2006 038 461

## Beschreibung

Die Erfindung geht aus von einer Gleichstrommaschine, welche als Elektromotor oder als Generator betrieben werden kann.

Bekannte Gleichstrommaschinen sind üblicherweise mit Schleifkontakten und Polwendern oder Kommutatoren ausgestattet. Bürstenlose Gleichstrommaschinen zeichnen sich dadurch aus, dass sie eine elektronische Kommutierung aufweisen. Gleichstrommaschinen mit elektronischem Umrichter werden im englischen Sprachgebrauch als brushless direct current, abgekürzt BLDC, Maschinen bezeichnet. Derartige bürstenlose Gleichstrommaschinen haben gegenüber den mit Schleifkontakten und Polwendern ausgestatteten Maschinen den Vorteil einer geringeren Verschleißanfälligkeit. Sie weisen jedoch den Nachteil auf, dass die Position des Rotors im Stator erfasst und die Stromrichtung im stromdurchflossenen Leiter des Rotors entsprechend an die erfasste Position angepasst werden muss. Dies sorgt für einen hohen Aufwand im Aufbau und in der Beschaltung der Gleichstrommaschine.

In der Automobil-Technik und bei industriellen Antrieben gewinnen Gleichstrom-Maschinen mit konzeptionell hohem Wirkungsgrad zunehmend an Bedeutung. So sind beispielsweise im Fall der Elektromobilität von Kraftfahrzeugen die Batterie-Größe, die Speicherfähigkeit und die Auflade-Geschwindigkeit von entscheidender Bedeutung. Der sparsame Einsatz der elektrischen Energie spielt eine wichtige Rolle. Darüber hinaus ist eine universelle Einsatzfähigkeit von Gleichstrom-Maschinen sowohl als Motor als auch als Generator zunehmend wichtig.

Betrachtet man zunächst den Antrieb von Aktuatoren in unterschiedlicher Funktion, so ist bei Einsatz von Batterien als Leistungs-Quelle der konventionelle Gleichstrom-Motor die bevorzugte Lösung. Solche Motoren bestehen aus einem Stator und einem Rotor, der im Betrieb über die intermittierende, magnetische Kopplung zwischen diesen ein Drehmoment erzeugt. Die hierfür nötige Flussdichte erfordert in der Regel den Einsatz von ferromagnetischem Material zur Erhöhung der elektro-magnetischen Feldstärke. Dies führt aber im Betrieb zu Ummagnetsierungs- und schwer vermeidbaren Wirbelstrom-Verlusten, sogenannten Eisenverlusten. Dadurch wird der Wirkungsgrad des Motors deutlich gesenkt. Darüber hinaus kommt es zu drehzahl-abhängigen Schaltverzögerungen, die konstruktive Korrektur-Elemente erforderlich machen. Die Nachteile führen entweder zu Verschleiß durch ein sogenanntes Bürstenfeuer, da Ströme teilweise unter induktiver Last geschaltet werden oder immer häufiger zu einer aufwändigen Leistungs-Elektronik (EC-Motoren), um den Motor ähnlich einer Synchron-Maschine betreiben zu können.

Aus der DE 10 2011 105 833 A1 ist eine bürstenlose Gleichstrommaschine mit einem Stator und einem koaxial dazu um eine Rotationsachse drehbar angeordneten Rotor bekannt. Der Stator umfasst einen zylindrischen Wicklungsträger aus einem ferromagnetischen Material mit einer Wicklung, welche im wesentlichen in axialer Richtung entlang der Innen- und Außenseite des Wicklungsträgers verläuft. Der Rotor ist mit mindestens einem zylindrischen, ferromagnetischen Hohlzylinder ausgestattet. Als Erreger dient mindestens ein Permanentmagnet mit axialer Polarisierung. Dieser kann Bestandteil des Rotors oder des Stators sein.

Aus der WO 2017/194352 A1 ist eine ähnliche Gleichstrommaschine bekannt, in der allerdings nichtmagnetische Wicklungsträger für die Statorwicklungen verwendet werden.

Der Erfindung liegt die Aufgabe zugrunde, eine Gleichstrommaschine zur Verfügung zu stellen, die gegenüber bekannten Gleichstrommaschinen einen erhöhten Wirkungsgrad aufweist.

Diese Aufgabe wird durch eine Gleichstrommaschine mit den Merkmalen des Anspruchs 1 gelöst. Die Gleichstrommaschine weist einen koaxial zu einer Rotationsachse angeordneten Stator und einen koaxial zur Rotationsachse und um die Rotationsachse drehbaren Rotor auf. Ein aus einem elektrisch isolierenden und ferromagnetisch inaktiven Material bestehender Wicklungsträger ist mit mindestens einer ersten Wicklung eines ersten elektrischen Leiters ausgestattet, wobei die erste Wicklung an dem Wicklungsträger mehrere Spulenelemente ausbildet, welche in Umfangsrichtung des Wicklungsträgers voneinander abgesetzt sind. Jedes Spulenelement besteht aus entlang der Oberfläche des Wicklungsträgers nebeneinander liegenden Leitungszügen des ersten Leiters. Darüber hinaus weist die Gleichstrommaschine eine erste Gruppe von Permanentmagnetelementen auf, welche bezogen auf die Rotationsachse in radialer Richtung polarisiert sind. Die Permanentmagnetelemente sind in einem um die Rotationsachse zentrischen ersten Ring mit Radius r₁ angeordnet. Die Permanentmagnetelemente weisen eine Ausdehnung in radialer Richtung auf. Der Radius r₁ entspricht dem Innenradius des durch die Permanentmagnetelemente der ersten Gruppe gebildeten Rings. Der Außenradius dieses Rings entspricht der Summe aus r₁ und der radialen Ausdehnung r_{Magnet1} der Permanentmagnetelemente der ersten Gruppe. Dabei wird davon ausgegangen, dass alle Permanentmagnetelemente der ersten Gruppe die gleiche radiale Ausdehnung r_{Magnet1} aufweisen.

Alle Permanentmagnetelemente der ersten Gruppe sind relativ zueinander unbeweglich angeordnet. Der Radius r₁ ist kleiner als der Radius des Wicklungsträgers. Ferner ist der Radius r₁ + r_{Magnet1} kleiner als der Radius des Wicklungsträgers. Die Permanentmagnetelemente der ersten Gruppe befinden sich innerhalb des Wicklungsträgers. Dabei umfasst entweder der Stator die Permanentmagnetelemente und der Rotor den Wicklungsträger mit der ersten Wicklung, oder der Stator umfasst den Wicklungsträger mit der ersten Wicklung und der Rotor die Permanentmagnetelemente. Eine Bewegung des Rotors führt damit stets dazu, dass die Spulenelemente relativ zu den Permanentmagnetelementen bewegt werden.

Die Gleichstrommaschine weist eine zweite Gruppe von Permanentmagnetelementen auf, welche bezogen auf die Rotationsachse radial polarisiert sind, wobei die Permanentmagnetelemente der zweiten Gruppe in einem um die Rotationsachse zentrischen zweiten Ring mit Radius r₂ > r₁ angeordnet sind. Dabei sind alle Permanentmagnetelemente der ersten Gruppe und der zweiten Gruppe relativ zueinander unbeweglich angeordnet. Der Wicklungsträger mit der ersten Wicklung ist zwischen dem ersten Ring der ersten Gruppe der Permanentmagnetelemente und dem zweiten Ring der zweiten Gruppe der Permanentmagnetelemente angeordnet, derart, dass sich der erste Ring der Permanentmagnetelemente der ersten Gruppe innerhalb des Wicklungsträgers befindet und der zweite Ring der Permanentmagnetelemente der zweiten Gruppe außerhalb des Wicklungsträgers. Der Wicklungsträger mit der ersten Wicklung ist relativ zu den Permanentmagnetelementen drehbar. Bei dieser doppelreihigen Anordnung der Permanentmagnetelemente der ersten und zweiten Gruppe kompensieren sich die in radialer Richtung auf die Spulenelemente wirkenden Anteile der Lorentzkräfte, welche auch als Magnetkräfte bezeichnet werden, weitgehend. Die in tangentialer Richtung wirkenden Magnetkräfte addieren sich dagegen, so dass im Ergebnis auf die Spulenelemente eine resultierende Kraft in tangentialer Richtung wirkt. Diese resultierende Kraft ändert sich in Abhängigkeit von der Position der Spulenelemente relativ zu den Permanentmagnetelementen. Die in tangentialer Richtung wirkendende Kraft bewirkt eine Beschleunigung des Rotors. Die tangentiale Richtung entspricht der Umfangsrichtung.

Die Permanentmagnetelemente der zweiten Gruppe weisen eine Ausdehnung in radialer Richtung auf. Der Radius r₂ entspricht dem Innenradius des durch die Permanentmagnetelemente der zweiten Gruppe gebildeten Rings. Der Außenradius dieses Rings entspricht der Summe aus r₂ und der radialen Ausdehnung r_{Magnet2} der Permanentmagnetelemente der zweiten Gruppe. Dabei wird davon ausgegangen, dass alle Permanentmagnetelemente der zweiten Gruppe die gleiche radiale Ausdehnung r_{Magnet2} aufweisen.

Fließt durch die Wicklung, welche die Spulenelemente bildet, ein elektrischer Strom und bewegen sich die Spulenelemente im Magnetfeld der Permanentmagnetelemente, so wirkt auf die bewegten Ladungsträger des stromdurchflossenen Leiters, welcher die Wicklung bildet, eine Lorentzkraft.

Diese Lorentzkraft sorgt dafür, dass der Rotor eine Beschleunigung erfährt. Umgekehrt führt eine Bewegung der beweglichen Ladungsträger der Wicklung im Magnetfeld der Permanentmagnetelement zu einem elektrischen Strom, welcher durch die Wicklung fließt. Je nachdem, welcher dieser beiden Effekte genutzt wird, kann die Gleichstrommaschine als Motor oder als Generator betrieben werden.

Der Wicklungsträger weist in radialer Richtung eine geringe Ausdehnung auf. Er ist dünn und besteht aus einem ferromagnetisch inaktiven Material, beispielsweise aus einer geeigneten Keramik. Die magnetische Einstrahlung durch die Permanentmagnetelemente der ersten und zweiten Gruppe erfolgt beidseitig im Bereich der Permanentmagnetelemente. Der Abstand zwischen dem Wicklungsträger und den Permanentmagnetelementen der ersten Gruppe ist in radialer Richtung bevorzugt gleich wie der Abstand zwischen dem Wicklungsträger und den Permanentmagnetelementen der zweiten Gruppe. Die Magnetfelder der Permanentmagnetelemente der ersten Gruppe und der Permanentmagnetelemente der zweiten Gruppe treffen sich etwa in der Mitte des Wicklungsträgers und werden zu den Rändern der Permanentmagnete abgelenkt. Dort erzeugen sie aufgrund der niedrigen relativen Permeabilität starke Pole mit der gewünschten komplementären Polarität. Der Aufbau des Wicklungsträgers gestattet zusätzlich die maximale magnetische Durchflutung der Wicklung.

Die Spulenelemente bilden ein System von flachen Spulen auf dem nicht ferromagnetischen und wirbelstrom-resistenten Wicklungsträger, welcher als Spulenkörper dient. Der Wicklungsträger kann eisenlos sein. Die Spulenelemente sind in einem Ring angeordnet. Dieser Ring ist konzentrisch um die Rotationsachse der Gleichstrommaschine positioniert. Die Spulenelemente bewegen sich relativ zu mehreren Permanentmagnetelementen, welche radial magnetisiert sind. Dadurch ergeben sich Magnetfelder, welche als radiale Querfelder bezeichnet werden.

Der Wicklungsträger ist ringförmig. Erweist eine Außenseite und eine Innenseite auf. Der Teil der Windungen der Wicklung, welcher an der Außenseite des Wicklungsträgers angeordnet ist, befindet sich im Fall der vollständigen Position im Querfeldbereich in einem engen Spalt zu den Permanentmagnetelementen der zweiten Gruppe. Der Teil der Windungen der Wicklung, welcher an der Innenseite des Wicklungsträgers angeordnet ist, befindet sich im Fall der vollständigen Position im Querfeldbereich in einem engen Spalt zu den Permanentmagnetelementen der ersten Gruppe. Fließt durch die Wicklung ein Strom, so entsteht zum einen nach der Rechte-Hand-Regel eine Kraft zwischen den bestromten Windungen der Wicklung. Zum anderen erzeugen die stromdurchflossenen Windungen der Wicklung ein Magnetfeld. Das Magnetfeld der Windungen an der Außenseite des Wicklungsträgers und an der Innenseite des Wicklungsträgers, welches außerhalb des Wicklungsträgers wirkt, wird als Außenfeld bezeichnet. Dieses Außenfeld kann sich an den Querfeldern der Permanentmagnetelemente der ersten und zweiten Gruppe abstützen und die Kraftwirkung verstärken. Außenfeld und Querfeld überlagern sich. Die stromdurchflossenen Windungen des Wicklungsträgers erzeugen darüber hinaus auch ein Magnetfeld im Inneren des Wicklungsträgers. Dieses wird als Innenfeld bezeichnet. Das Innenfeld wird im Wicklungsträger ebenfalls konzentriert und bildet an den Enden die gewünschten kräftigen Pole aus. Damit steht das gesamte elektrisch erzeugte Magnetfeld für den Antrieb zur Verfügung.

Die Wicklung besitzt eine hohe Dichte von Windungen. Wird die Wicklung bestromt, werden alle Windungen vom gleichen Strom durchflossen und erzeugen dadurch an der Wicklungsoberfläche ein entsprechendes Vielfaches der magnetischen Feldstärke der einzelnen Abschnitte der Windungen in Richtung senkrecht zu den Strombahnen. Die Feldrichtung ist auf beiden Seiten des Wicklungsträgers die Gleiche.

Eine weitere Erhöhung der magnetischen Flussdichte des Spulenstroms ist über die Verkleinerung des radialen Abstands zwischen den an der Außenseite des Wicklungsträgers verlaufenden Abschnitten der Wicklung und den Permanentmagnetelementen der zweiten Gruppe gegeben, sodass eine für Maschinenanwendungen hinreichende Kraftentfaltung darzustellen ist. Diese ergibt sich zunächst einmal nach dem Querfeldeinfluss zwischen den Windungen, als auch massiv aus der Wechselwirkung des Außenfeldes mit den Querfeldern der Permanentmagnetelemente.

Eine besondere Kraftquelle besteht in der Polbildung des Rückflusses der Permanentmagnetelemente an deren Rändern. Durch den hohen magnetischen Widerstand des Wicklungsträgers ergeben sich axiale Feldstärken zwischen der Mitte der Permanentmagnete und deren Rändern, die über die oben geschilderten Vorgänge hinaus den Eintritt und den Austritt der Spulenelemente in Bezug auf die Querfelder unterstützen.

Werden die Spulenelemente relativ zu den Permanentmagnetelementen bewegt, treten aufgrund der Lorentzkräfte Beschleunigungs- und Brems-Kräfte zwischen den Spulenelementen und den Permanentmagnetelementen auf, so dass nach einer vollständigen Umdrehung des Rotors relativ zum Stator kein Energie-Transfer stattgefunden hat. Die Beschleunigungs- und Brems-Kräfte werden genutzt, um die Gleichstrommaschine entweder als Motor oder als Generator einzusetzen.

Bei näherer Betrachtung der Interaktion zwischen den Spulenelementen und den Permanentmagnetelementen zeigt sich eine maximale Abstoßung in radialer Richtung, wenn sich die Mitte eines Spulenelements an einem ersten Rand eines Permanentmagnetelements vorbei bewegt. Wird das Spulenelement weiter relativ zu dem Permanentmagnetelement bewegt, so reduziert sich die abstoßende Kraft zunächst auf null und geht anschließend in eine anziehende Kraft über.

In dem prinzipiellen Aufbau der Spulenelemente sind die Wirkungen als Interaktion zwischen den beweglichen Ladungsträgern in den Spulen und in den Querfeldern der Permanentmagnetelementen sowie den oben beschriebenen Komplementätfeldern zu erklären. Das bedeutet, dass im Bereich der Querfelder eine antriebserzeugende Energiezufuhr aus den Spulenelementen erzeugt wird und im Bereich der Komplementärfelder eine Energie erfordernde generatorische Bremswirkung in den bestromten Spulenelementen erfolgt. Bei einem gedachten Übergang eines Spulenelements aus dem Querfeldbereich in den Komplementärfeldbereich setzt die Bremswirkung in der Spule in deren vorderem Teil ein, während der hintere Teil noch energetisch aufgeladen wird. Durch die Leitfähigkeit des Spulenelements kompensieren sich aber Bremsung und Antrieb in allen Positionen, so dass die Spulenenergie stets der Position angepasst ist. Dies ist ein wesentlicher Grund dafür, dass Schaltvorgänge auch ohne elektronische Hilfen glatt und störungsfrei erfolgen. Die Übergangszeiten sind dabei wesentlich länger als die elektronischen Schaltzeiten.

Vorteilhafterweise ist die Gleichstrommaschine aus modularen Elementen aufgebaut. Dadurch ist eine Anpassung an verschiedene Anforderungen und Aufgaben möglich. So kann der Wicklungsträger mit der ersten Wicklung derart aufgebaut sein, dass elektrische Anschlüsse in mechanischen Verbindungselementen enthalten sind. Wärmebrücken können vorgesehen sein. Der modulare Aufbau ermöglicht niedrige Herstellungskosten und große Vielfalt.

Ändert sich die Stromrichtung in der Wicklung, so ändert sich die Richtung der Kraft in Umfangsrichtung. Hierzu kann der Rotor abgebremst oder die Drehrichtung des Rotors geändert werden. Eine Änderung der Richtung der Kraft der Umfangsrichtung erfolgt auch, wenn Permanentmagnetelemente verwendet werden, die in umgekehrter Richtung radial polarisiert sind.

Die Kraft in tangentialer Richtung hängt unter anderem von der magnetischen Flussdichte und von der Feldstärke der Permanentmagnetelemente ab.

Die maximale Kraft und das maximale Drehmoment wird erreicht, wenn ein Spulenelement etwa zur Hälfte mit einem ihm in radialer Richtung benachbarten Permanentmagnetelement überlappt und die Überdeckung während der Relativbewegung zwischen Spulenelement und Permanentmagnetelement zunimmt. Das Drehmoment nimmt ab, wenn das Spulenelement nur noch etwa zur Hälfte mit dem in radialer Richtung benachbarten Permanentmagnetelement überlappt und die Überdeckung abnimmt.

Damit sich der beschriebene Effekt für alle Spulenelemente addiert, sind die Spulenelemente und die Permanentmagnetelemente vorteilhafterweise derart dimensioniert und relativ zueinander angeordnet, dass sich stets alle Spulenelemente in übereinstimmender relativer Position zu den Permanentmagnetelementen befinden. In diesem Fall befinden sich alle Spulenelemente gleichzeitig in maximaler Überdeckung in radialer Richtung mit den ihnen jeweils benachbarten Permanentmagnetelementen. Bei einer Relativbewegung zwischen Rotor und Stator nimmt für alle Spulenelemente und alle Permanentmagnetelemente die Überdeckung in gleicher Weise und gleichem Umfang ab, bis sich die Spulenelemente genau in den Kreissegmenten befinden, in denen keine Permanentmagnete sind. Werden Stator und Rotor anschließend weiter relativ zueinander bewegt, nimmt die Überdeckung zwischen Spulenelementen und Permanentmagnetelementen anschließend wieder zu.

Wird die Gleichstrommaschine als Motor betrieben, so kann der durch die Wicklung fließende Spulenstrom drehzahl-synchron getaktet werden. Aufgrund dieser periodischen Änderung des Spulenstroms kann die Bremskraft ganz oder teilweise eliminiert werden. Dabei variiert der Spulenstrom zwischen null und einem vorgegebenen Maximalwert. Wegen der geringen Induktivität der Spulenelemente ist dies auch bei hohen Drehzahlen verlustarm ohne Winkel-Korrektur möglich. Anhand eines vom Spulenstrom abhängigen Triggers und gegebenenfalls dessen Einstellung kann die abgegebene oder aufgenommene Leistung der Gleichstrommaschine eingestellt werden. Eine reduzierte Leistungsaufnahme zeigt sich in einer Erhöhung des Eingangswiderstandes.

In der Beschleunigungs-Phase des Rotors wird bei der als Motor betriebenen Gleichstrommaschine elektrische Leistung über die Spulenelemente in mechanische Leistung des Rotors umgewandelt. In der Brems-Phase des Rotors wird bei der als Generator betriebenen Gleichstrommaschine die mechanische Leistung des Rotors in elektrische Leistung der Spulenelemente umgewandelt, die aus den Spulenelementen einem Stromspeicher oder einem Stromverbraucher zugeführt werden kann. Beide Effekte können bei der Gleichstrommaschine unabhängig von ihrem Betrieb genutzt werden. Bei entsprechender Regelung lassen sich thermische Verluste klein halten.

Es besteht die Möglichkeit, die Gleichstrommaschine mit maximalem Drehmoment, beispielsweise als 24V-Motor, zu starten, um die Gleichstrommaschine anschließend durch Veränderung des Triggers auf die gewünschte Motor-Leistung einzustellen.

Es besteht die Möglichkeit durch eine Veränderung des Triggers das wirksame Drehmoment über einen Null-Durchgang bis zur Umkehr des Vorzeichens zu ändern. Auf diese Weise kann die Laufrichtung des Rotors geändert werden.

Ein weiterer Vorteil gegenüber herkömmlichen Gleichstrommaschinen besteht in der Vermeidung einer magnetischen Sättigung im Bereich hoher Leistung. Eine derartige magnetische Sättigung kann zu einer kurzzeitigen Überlastung führen, was unerwünscht und nachteilig ist.

Da der Wicklungsträger nicht aus ferromagnetischem Material besteht, werden Verluste aufgrund von Ummagnetisierung und aufgrund von Wirbelströmen vermieden. Um trotz des ferromagnetisch inaktiven Wicklungsträgers eine ausreichend hohe magnetische Flussdichte zu garantieren, sind die Permanentmagnetelemente und die Spulenelemente sehr kompakt angeordnet. Der Abstand dieser Komponenten in radialer Richtung ist derart reduziert, dass eine Relativbewegung des Rotors zum Stator möglich und gewährleistet ist, aber darüber hinaus keine großen Lücken in radialer Richtung vorhanden sind. Da die Magnetfeldstärke des durch die Permanentmagnetelemente erzeugten Magnetfelds mit zunehmendem Abstand abnimmt, bewegen sich bei kleinen radialen Abständen die Spulenelemente im Bereich großer Feldstärken.

Darüber hinaus sind vorteilhafterweise die Spulenelemente möglich eng gewickelt, so dass der Abstand zwischen den Windungen eines Spulenelements möglichst klein ist. Vorteilhafterweise berühren sich benachbarte Windungen eines Spulenelements. Bei hinreichend dichter Spulenwicklung entstehen für die praktische Anwendung ausreichend große Kräfte.

Die bestromten Spulenelemente stellen im Bereich der Magnetfelder der Permanentmagnetelemente autonome Antriebs-Einheiten dar, die ihren gesamten magnetischen Fluss selbst einsetzen. Eine magnetische Kopplung zwischen benachbarten bestromten Spulenelementen tritt nicht auf oder ist zumindest vernachlässigbar.

Die autonomen Spulenelemente ohne magnetische Kopplung mit benachbarten Spulenelementen weisen viele hoch verdichtete Leiterbahnen auf dem schmalen amagnetischem Wicklungsträger auf. Dies führt bei einer beidseitigen Anordnung von Permanentmagnetelementen zu einer Dreiseiten-Kompression der Spulenfelder: hinten durch einen Komplementärfeld-Pol, vorne mit Saugwirkung durch das Magnetträger-Material. Vorne und hinten bezieht sich dabei auf die Bewegungsrichtung des Wicklungsträgers relativ zu den Permanentmagnetelementen.

Der allen Spulenelementen gemeinsame Wicklungsträger aus ferromagnetisch inaktivem Material verhindert eine magnetische Brücke zwischen den Spulenelementen, welche sich nachteilig auf die Erzeugung eines Drehmoments auswirken könnte. Die Entstehung von sogenannten Eisenverlusten wird vermieden.

Die erfindungsgemäße Gleichstrommaschine stellt damit eine kostengünstige unipolare Gleichstrommaschine mit hohem elektromechanischem Wirkungsgrad dar.

Nach einer vorteilhaften Ausgestaltung der Erfindung weisen die Permanentmagnetelemente der ersten Gruppe die gleiche Form, Größe und Magnetisierung auf. Darüber hinaus sind die Permanentmagnetelemente der ersten Gruppe äquidistant angeordnet, derart dass der Winkelabstand zwischen je zwei benachbarten Permanentmagnetelementen der ersten Gruppe für alle Permanentmagnetelemente gleich ist.

Erfindungsgemäß umfasst die erste Gruppe eine Anzahl n an Permanentmagnetelementen. Jedes der n Permanentmagnetelemente erstreckt sich über ein Winkelsegment 360°/2n. Der Winkelabstand zwischen je zwei benachbarten Permanentmagnetelementen der ersten Gruppe beträgt 360°/2n.

Nach einer vorteilhaften Ausgestaltung der Erfindung besteht der Wicklungsträger aus einem nicht magnetisierbaren, elektrisch isolierenden und möglichst gut wärmeleitenden Material. Geeignet ist beispielsweise AluminiumNitrid.

Nach einer weiteren vorteilhaften Ausgestaltung der Erfindung weisen der Rotor und/ oder der Stator Öffnungen auf, durch die Luft zwischen die Spulenelemente ein- und ausströmen kann. Diese Luft zwischen Rotor und Stator wird dort beschleunigt und saugt durch den entstehenden Unterdruck kalte Luft von außen an. Wegen der hohen Relativ-Geschwindigkeit und der unregelmäßigen Oberflächen wird die Luft stark verwirbelt und bietet eine wirkungsvolle Kühlung. Das Austreten der Luft wird durch die Zentrifugal-Beschleunigung begünstigt.

Die Kombination aus dem wärmeleitenden Material des Wicklungsträgers und den Öffnungen im Stator und/ oder Rotor sorgt für eine wirkungsvolle Kühlung der Haupt-Verlustleistungs-Erzeuger.

Es ist unerheblich, ob die Spulenelemente Bestandteil des Rotors oder Stators sind. Wesentlich ist lediglich, dass die Spulenelemente relativ zu den Permanentmagnetelementen bewegt werden. Bildet der Wicklungsträger zusammen mit den Spulenelementen einen Bestandteil des Rotors und wird relativ zu den Permanentmagnetelementen bewegt, so kann die Stromzufuhr zu der Wicklung über Roll- oder Schleifkontakte erfolgen. Die Strom-Einspeisung erfolgt mit konstanter Stromstärke ohne induktive Spitzen.

Nach einer weiteren vorteilhaften Ausgestaltung der Erfindung sind die Permanentmagnetelemente der ersten Gruppe in radialer Richtung umgekehrt polarisiert wie die Permanentmagnetelemente der zweiten Gruppe.

Erfindungsgemäß liegen sich je ein Magnetelement der ersten Gruppe und ein Magnetelement der zweiten Gruppe in radialer Richtung derart gegenüber, dass das Magnetelement der ersten Gruppe außerhalb des Wicklungsträgers und das diesem Magnetelement der ersten Gruppe gegenüberliegende Magnetelement der zweiten Gruppe innerhalb des Wicklungsträgers angeordnet ist und beide Magnetelemente das gleiche Winkelsegment abdecken.

Nach einer weiteren vorteilhaften Ausgestaltung der Erfindung sind die Permanentmagnetelemente der zweiten Gruppe untereinander gleich groß. Sie weisen alle die gleiche Form, die gleiche Größe und die gleiche Magnetisierung auf. Je zwei Permanentmagnetelemente der zweiten Gruppe sind äquidistant angeordnet, so dass der Winkelabstand zwischen je zwei benachbarten Permanentmagnetelemente gleich groß ist.

Nach einer weiteren vorteilhaften Ausgestaltung der Erfindung erstrecken sich alle m Permanentmagnetelemente der zweiten Gruppe jeweils über ein Winkelsegment 360°/2m. Der Winkelabstand zwischen je zwei benachbarten Permanentmagnetelementen der zweiten Gruppe beträgt 360°/2m.

Erfindungsgemäß stimmt die Anzahl n der Permanentmagnetelemente der ersten Gruppe mit der Anzahl m der Permanentmagnete der zweiten Gruppe überein. Die Permanentmagnetelemente der ersten Gruppe sind relativ zu den Permanentmagnetelementen der zweiten Gruppe derart angeordnet, dass sich in jedem Winkelsegment 360°/ 2n bezogen auf die Rotationsachse je ein Permanentmagnetelement der ersten Gruppe und je ein Permanentmagnetelement der zweiten Gruppe befinden.

Erfindungemäß stimmt die Anzahl der voneinander abgesetzten Spulenelemente mit der Anzahl n der Permanentmagnetelemente der ersten Gruppe überein. Jedes der Spulenelemente erstreckt sich über ein Winkelsegment bezogen auf die Rotationsachse, welches kleiner ist 360°/n.

Nach einer weiteren vorteilhaften Ausgestaltung der Erfindung erstreckt sich jedes Spulenelement über ein Winkelsegment 360°/2n.

Nach einer weiteren vorteilhaften Ausgestaltung der Erfindung ist die Gleichstrommaschine mit einer Schalteinrichtung ausgestattet, welche den ersten Leiter der ersten Wicklung periodisch abwechselnd mit Strom versorgt und strom los schaltet.

Nach einer weiteren vorteilhaften Ausgestaltung der Erfindung ist die Schalteinrichtung mit einer Trigger-Einrichtung ausgestattet. Diese sorgt dafür, dass die Wicklung periodisch mit Strom in Abhängigkeit von der Position der Spulenelemente relativ zu den Permanentmagnetelementen versorgt wird und dazwischen die Wicklung stromlos ist.

Nach einer weiteren vorteilhaften Ausgestaltung der Erfindung ist die Periodenlänge P = T₁ + T₂ vorgegeben, wobei das Zeitintervall T₁, in welchem der erste Leiter mit Strom versorgt wird, und das Zeitintervall T₂, in welchem der erste Leiter stromlos geschaltet ist, gleich lang sind.

Nach einer weiteren vorteilhaften Ausgestaltung der Erfindung ist die Schalteinrichtung mit einem Geber ausgestattet, der eine Position des Wicklungsträgers relativ zu den Permanentmagnetelementen erfasst. Darüber hinaus ist die Schalteinrichtung derart ausgestattet ist, dass sie den Strom in Abhängigkeit der durch den Geber erfassten Position ein- oder ausschaltet.

Nach einer weiteren vorteilhaften Ausgestaltung der Erfindung ist an dem Wicklungsträger eine zweite Wicklung eines zweiten elektrischen Leiters angeordnet. Die zweite Wicklung bildet an dem Wicklungsträger mehrere zweite voneinander abgesetzte Spulenelemente aus. Zwischen je zwei ersten Spulenelementen der ersten Wicklung ist ein zweites Spulenelement der zweiten Wicklung am Wicklungsträger angeordnet. Durch die unterschiedliche Aktivierung durch Bestromung der ersten Wicklung und der zweiten Wicklung ergeben sich vielfältige Anwendungsmöglichkeiten, welche durch das Querfeld der Permanentmagnetelemente der ersten und zweiten Gruppe und das oben beschriebene Querfeld unterstützt werden.

Nach einer weiteren vorteilhaften Ausgestaltung der Erfindung versorgt die Schalteinrichtung abwechselnd den ersten Leiter und den zweiten Leiter mit Strom, derart, dass der erste Leiter mit Strom versorgt ist, während der zweite Leiter stromlos ist und dass der zweite Leiter mit Strom versorgt ist, während der erste Leiter stromlos ist.

Nach einer weiteren vorteilhaften Ausgestaltung der Erfindung ist die Periodenlänge P = T₁ + T₂ vorgegeben. Dabei ist in dem Zeitintervall T₁ der erste Leiter mit Strom versorgt und der zweite Leiter stromlos. In dem Zeitintervall T₂ ist der erste Leiter stromlos geschaltet und der zweite Leiter mit Strom versorgt. Bevorzugt sind T₁ und T₂ gleich lang.

Nach einer weiteren vorteilhaften Ausgestaltung der Erfindung ist die Anzahl a der Spulenelemente der ersten Wicklung und die Anzahl b der Spulenelemente der zweiten Wicklung gleich groß, so dass a = b. Alle Spulenelemente der ersten Wicklung und alle Spulenelemente der zweiten Wicklung erstrecken sich über ein gleich großes Winkelsegment β.

Nach einer weiteren vorteilhaften Ausgestaltung der Erfindung erstreckt sich jedes erste Spulenelement der ersten Wicklung und jedes zweite Spulenelement der zweiten Wicklung über ein Winkelsegment, welches kleiner oder gleich 360°/2a ist.

Nach einer weiteren vorteilhaften Ausgestaltung der Erfindung erstreckt sich jedes erste Spulenelement der ersten Wicklung und jedes zweite Spulenelement der zweiten Wicklung über ein Winkelsegment, welches kleiner ist als 360°/2a, so dass sich ein erstes Spulenelement und ein benachbartes zweites Spulenelement nicht berühren und einen ausreichenden Abstand aufweisen.

Nach einer weiteren vorteilhaften Ausgestaltung der Erfindung ist der Abstand zwischen je zwei benachbarten Spulenelementen gleich groß.

Nach einer weiteren vorteilhaften Ausgestaltung der Erfindung verlaufen die Windungen der ersten und/ oder zweiten Wicklung im wesentlichen in radialen Ebenen relativ zur Rotationsachse.

Nach einer weiteren vorteilhaften Ausgestaltung der Erfindung besteht der Wicklungsträger aus einem dielektrischen Material.

Nach einer weiteren vorteilhaften Ausgestaltung der Erfindung besteht der Wicklungsträger aus Keramik.

Nach einer weiteren vorteilhaften Ausgestaltung der Erfindung sind die Permanentmagnetelemente auf einem Magnetträger angeordnet. Der Magnetträger besteht bevorzugt aus einem ferromagnetischen Material.

Nach einer weiteren vorteilhaften Ausgestaltung sind die Permanentmagnetelemente formschlüssig an dem Magnetträger angeordnet. In diesem Fall ist eine sonstige Befestigung, beispielsweise mittels Klebstoff, überflüssig.

Nach einer alternativen Ausgestaltung der erfindungsgemäßen Gleichstrommaschine sind die Permanentmagnetelemente bezogen auf die Rotationsachse in axialer Richtung polarisiert. Hinsichtlich aller anderen Merkmale stimmt die Gleichstrommaschine mit der obigen Gleichstrommaschine überein.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele des Erfindungsgegenstandes dargestellt. Es zeigen:
- Figur 1: erstes Ausführungsbeispiel einer Gleichstrommaschine im Längsschnitt,
- Figur 2: Gleichstrommaschine gemäß Figur 1 im Querschnitt,
- Figur 2a: nicht maßstabsgetreuer Ausschnitt aus dem Querschnitt gemäß Figur 2 in schematischer linearer Darstellung,
- Figur 3: Schaltplan der Gleichstrommaschine gemäß Figur 1,
- Figur 4: zweites Ausführungsbeispiel einer Gleichstrommaschine im Querschnitt,
- Figur 4a: Ausschnitt aus Figur 4,
- Figur 4b: nicht maßstabsgetreuer Ausschnitt aus dem Querschnitt gemäß Figur 4 in schematischer linearer Darstellung,
- Figur 5: drittes Ausführungsbeispiel einer Gleichstrommaschine im Querschnitt,
- Figur 5a: nicht maßstabsgetreuer Ausschnitt aus dem Querschnitt gemäß Figur 5 in schematischer linearer Darstellung,
- Figur 6: Schaltplan der Gleichstrommaschine gemäß Figur 5,
- Figur 7: Darstellung der auf den Rotor der Gleichstrommaschine gemäß Figur 1 wirkenden Kräfte in Abhängigkeit von der Zeit,
- Figur 8: Darstellung der auf den Rotor der Gleichstrommaschine gemäß Figur 1 wirkenden Kräfte in Abhängigkeit von der Zeit bei gegenüber Figur 7 verändertem Trigger,
- Figur 9: Schaltplan der Gleichstrommaschine gemäß Figur 1 oder Figur 5 bei einer Anwendung zum Laden einer Batterie,
- Figur 10: Kontaktscheibe mit Taktgeber für eine Gleichstrommaschine gemäß Figur 1 oder Figur 5, Seitenansicht,
- Figur 11: Kontaktscheibe mit Taktgeber gemäß Figur 10 in einer Ansicht von oben.

### Beschreibung der Ausführungsbeispiele

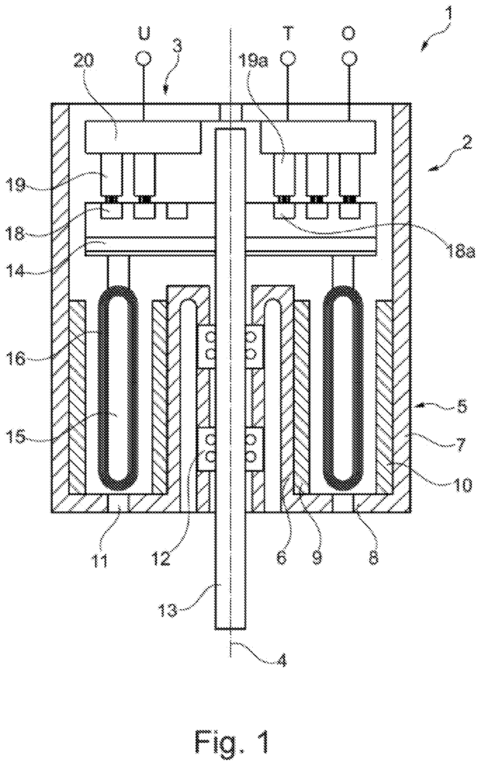

In den Figuren 1 bis 3 ist ein erstes Ausführungsbeispiel einer Gleichstrommaschine 1 mit einem Stator 2 und einem Rotor 3 dargestellt. Dabei ist der Rotor um eine Rotationsachse 4 der Gleichstrommaschine 1 drehbar. Der Stator 2 umfasst einen Magnetträger 5 aus einem ferromagnetischen Material. Der Magnetträger weist einen ersten zylindrischen Magnetträgerabschnitt 6 und einen zweiten zylindrischen Magnetträgerabschnitt 7 auf. Die beiden Magnetträgerabschnitte 6, 7 sind koaxial zu der Rotationsachse 4 angeordnet. Sie unterscheiden sich hinsichtlich ihres Radius r₁ und r₂. Sie sind über einen senkrecht zur Rotationsachse ausgerichteten Statorabschnitt 8 starr miteinander verbunden. Die beiden Magentträgerabschnitte 6, 7 bilden zwei koaxiale Ringe. An dem ersten Magnetträgerabschnitt 6 ist eine erste Gruppe von mehreren Permanentmagnetelementen 9 angeordnet. An dem zweiten Magnetträgerabschnitt 7 ist eine zweite Gruppe von mehreren Permanentmagnetelementen 10 angeordnet. Die Permanentmagnetelemente 9, 10 der ersten und zweiten Gruppe sind über die beiden Magnetträgerabschnitte 6, 7 und den Statorabschnitt 8 derart starr angeordnet, dass sie sich nicht relativ zueinander bewegen können. Der Statorabschnitt 8 ist mit Öffnungen 11 ausgestattet, über die Luft in den Stator 2 einströmen und aus dem Stator 2 ausströmen kann.

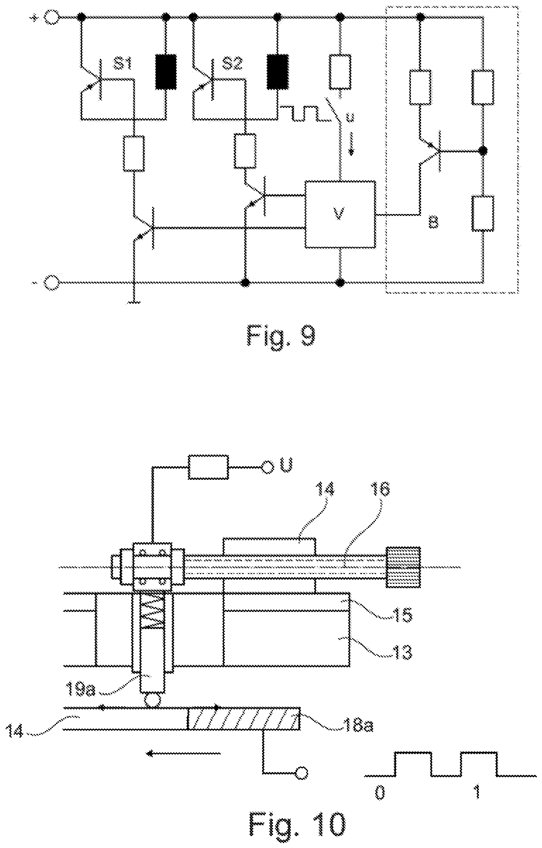

Der Rotor 3 umfasst eine an dem Stator 2 über Lager 12 drehbar aufgenommene Antriebsachse 13, welche koaxial zu der Rotationsachse 4 verläuft, einen starr mit der Antriebsachse verbundenen Rotorträger 14 und einen starr an dem Rotorträger 14 angeordneten Wicklungsträger 15 mit einer Wicklung 16, welche an dem Wicklungsträger 15 mehrere Spulenelemente 17 ausbildet. Der Wicklungsträger 15 weist eine im wesentlichen zylindrische Form auf. Er ist koaxial zu der Rotationsachse 4 an dem Rotorträger 14 angeordnet. An dem Rotorträger 14 ist eine elektrische Schaltung angeordnet, welche mit der Wicklung 16 elektrisch leitend verbunden ist. Über Kontaktringe 18 und Rollkontakte 19 wird eine elektrisch leitende Verbindung zwischen der bewegten Wicklung 16 und einem feststehenden Versorgungsmodul 20 hergestellt. Wird die Gleichstrommaschine als Motor betrieben, versorgt das Versorgungsmodul 20 die Wicklung 16 mit Strom. Eine Schalteinrichtung sorgt für Schalt-Impulse, welche abhängig vom Winkel des Rotors 3 relativ zum Stator 2 sind. Die Stromdichte der Wicklung 16 kann durch eine Vielzahl von gleichmäßig über die Kontaktringe 18 verteilten Rollkontakten 19 reduziert werden. Die Rollkontakte 19 weisen längliche Stifte 19a auf, die mittels in Figur 10 dargestellten Federn am Versorgungsmodul 20 aufgenommen sind. Die Federn drücken die Stifte 19a der Rollkontakte 19 gegen die Kontaktringe 18. Die Stifte 19a sind mit ihrer Längsrichtung parallel zur Rotationsachse 4 ausgerichtet. Das Versorgungsmodul 20 weist mindestens einen Versorgungs-Anschluss U, einen Masse-Anschluss 0 und einen Trigger-Eingang T auf.

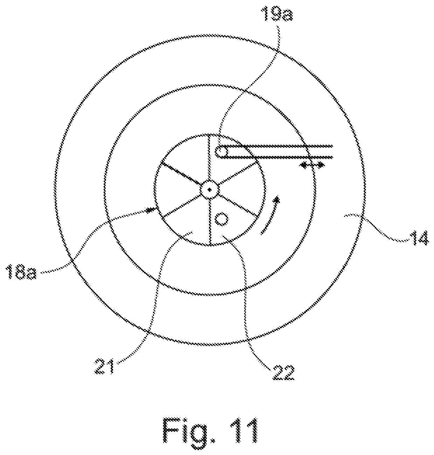

Die Möglichkeiten bei der Auslegung eines einsatzspezifischen, winkelabhängigen Triggers für die Wicklung 16 sind so vielfältig und auch einfach zu realisieren, dass in Figur 1 auf die Darstellung einer bestimmten Anordnung verzichtet wurde. Wesentlich ist aber, dass wegen der Eigenschaften der als Motor betriebenen Gleichstrommaschine 1 eine funktions-verändernde Trigger-Verstellung ohne Korrektur auch bei hohen Drehzahlen möglich ist. In Figur 1 kann dies prinzipiell dadurch geschehen, dass der zugehörige Rollkontakt 19 auf einer Kreisbahn bewegt wird. Der zugehörige Kontaktring 18a weist winkelgleiche elektrisch leitende Sektoren 21 und nicht-leitende Sektoren 22 auf. Dies ist in Figur 11 dargestellt. Die Anzahl der Sektoren 21 und 22 kann mit der Anzahl der Spulenelemente 17 übereinstimmen, welche die Wicklung 16 an dem Wicklungsträger 15 ausbildet. Die Spulenelemente werden entsprechend der jeweiligen Position der Sektoren 21, 22 relativ zum Rollkontakt 19 mit Strom versorgt. In der Darstellung gemäß Figur 1 kontaktiert der Rollkontakt 19 einen nicht-leitenden Sektor 22 des Kontaktrings 18a.

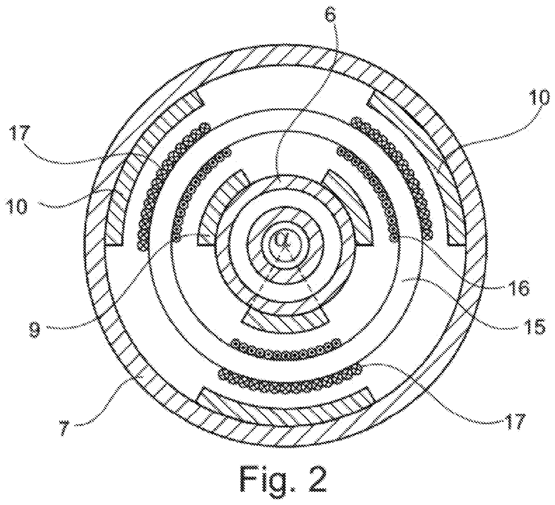

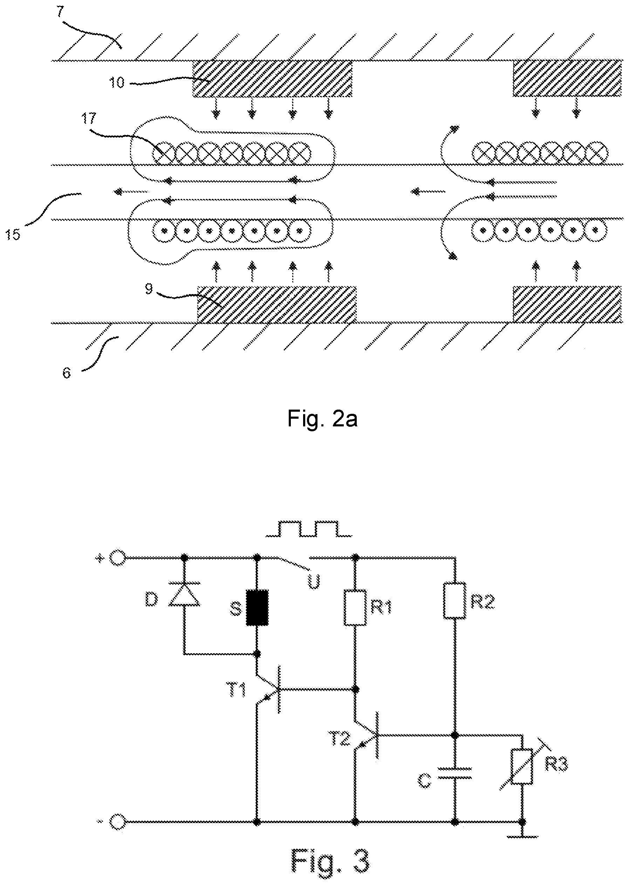

Figur 2 zeigt einen Querschnitt durch die Gleichstrommaschine gemäß Figur 1 im Bereich der Spulenelemente 17 und der Permanentmagnetelemente 9, 10. In der Darstellung ist erkennbar, dass die Spulenelemente 17 an dem Wicklungsträger 15 voneinander abgesetzt sind, so dass sich zwischen einem ersten Spulenelement 17 und einem zweiten Spulenelement 17 ein Abstand ergibt. In der Darstellung ist erkennbar, dass die Anzahl der Permanentmagnetelemente 9 der ersten Gruppe, die Anzahl der Permanentmagnetelemente 10 der zweiten Gruppe und die Anzahl der Spulenelemente 17 übereinstimmen. Permanentmagnetelemente 9, Permanentmagnetelemente 10 und Spulenelemente 17 erstrecken sich jeweils über einen im wesentlichen gleich großen Winkel a. Der Winkelabstand zwischen je zwei Permanentmagnetelementen 9, zwischen je zwei Permanentmagnetelementen 10 und zwischen je zwei Spulenelementen 17 entspricht ebenfalls dem Winkel α. In der Darstellung gemäß Figur 2 befindet sich jedes Spulenelement 17 nahezu vollständig zwischen einem ersten und zweiten Permanentmagnetelement 9, 10. Die Spulenelemente 17 überlappen in radialer Richtung gesehen jeweils mit einem ersten und einem zweiten Permanentmagnetelement 9, 10. Da die Permanentmagnete 9 der ersten Gruppe in umgekehrter radialer Richtung magnetisiert sind wie die Permanentmagnete 10 der zweiten Gruppe und die Stromrichtung der Wicklung 16 an der Innenseite des Wicklungsträgers 15 umgekehrt ist wie an der Außenseite des Wicklungsträgers, heben sich die in radialer Richtung wirkenden Komponenten der Lorentzkraft gegeneinander auf, während sie sich in tangentialer Richtung addieren. Dadurch wirkt in radialer Richtung eine beschleunigende Kraft. Der Rotor bewegt sich hier entgegen dem Uhrzeigersinn.

Die Spulenelemente 17 werden so lange mit Strom versorgt, wie sie mindestens zur Hälfte mit einem ersten und einem zweiten Permanentmagnetelement 9, 10 überlappen. Sobald die Spulenelemente 17 in radialer Richtung weniger als hälftig durch Permanentmagnetelemente 9, 10 überdeckt sind, wird die Wicklung 16 stromlos geschaltet. Bei Wiedereintritt der Spulenelemente 17 in das Magnetfeld der nächsten Permanentmagnetelemente 9, 10 und einer mindestens hälftigen Überdeckung werden die Spulenelemente 17 erneut mit Strom versorgt.

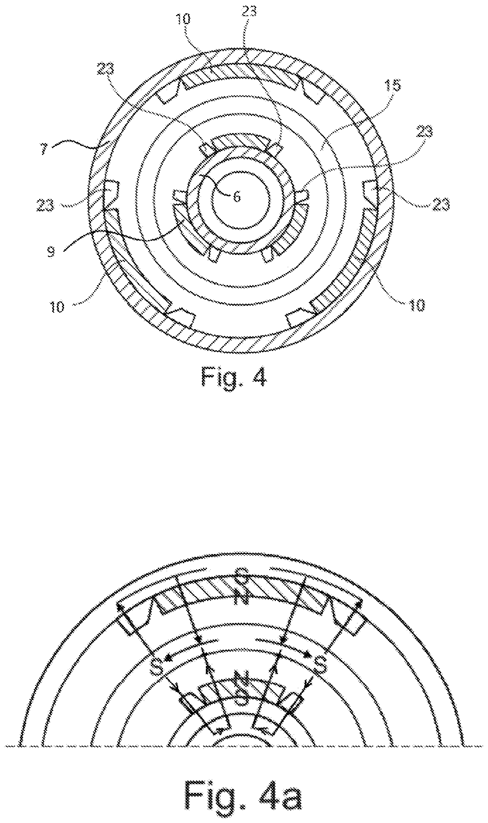

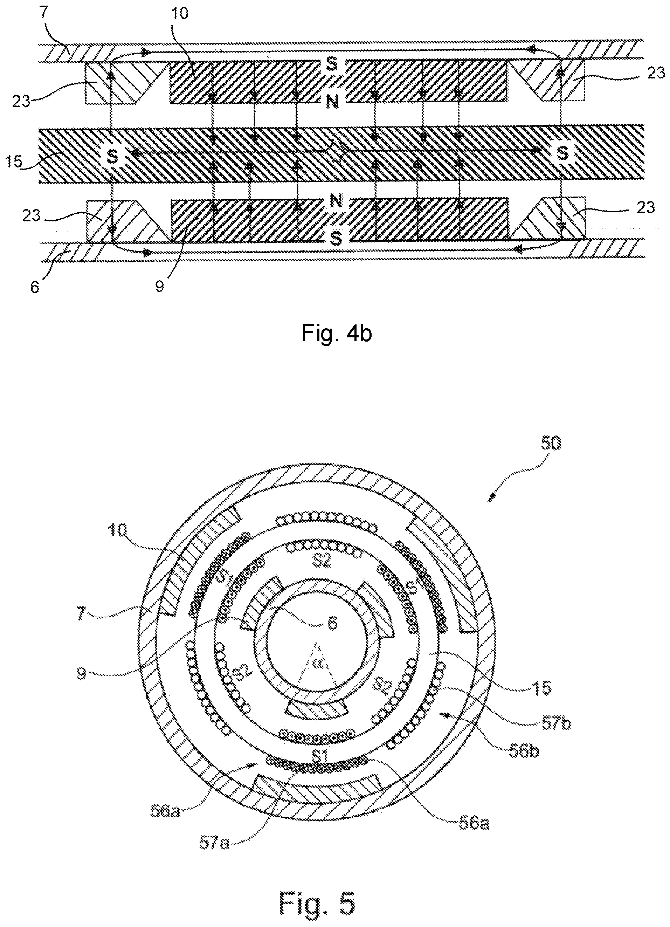

Die Darstellung gemäß Figur 2 und gemäß Figur 2a zeigt die wesentlichen Ursachen für die "eisenfreie" Erzeugung eines Drehmoments. In der schematischen linearen Darstellung gemäß Figur 2 ist das Querfeld der Permanentmagnetelemente durch Pfeile dargestellt. Ferner ist der magnetische Fluss angedeutet sowie die in tangentialer Richtung auf den Wicklungsträger wirkende Kraft. Die Stromrichtung in den Windungen der Wicklung ist dargestellt. Sie erzeugen einen kompakten Magnet-Fluss entsprechend der Leiterbahn-Dichte und dem durch die Wicklung fließenden Strom. Hilfreich ist zusätzlich, dass sich auch das Außenfeld nicht aufspreizen kann. Die Strom-Richtungen auf beiden Seiten des Wicklungsträgers 15 sind entgegengesetzt, die Richtung der Magnetfelder der Permanentmagnetelemente ebenfalls, so dass die resultierende Lorentz-Kraft jeweils tangential in die gleiche Richtung weist. Die zweite Quelle antrieb-erzeugender Magnet-Felder speist sich aus dem Rückfluss der Permanentmagnetelemente über den ferromagnetischen Magnetträger 5. Durch Ausbildung von Komplementär-Polen an den Rändern der Permanentmagnetelemente 9, 10 entsteht, wie in Figur 4, 4a und 4b dargestellt, eine weitere gleichgerichtete Tangential-Kraft.

Figur 3 zeigt eine einfache Schaltung für die Wicklung 16 und damit die durch die Wicklung gebildeten Spulenelemente 17, um die Gleichstrommaschine 1 als Motor zu betreiben. Die Haupt-Elemente sind der Spulen-Strom Schalter T1 und die Spule S mit der Freilauf-Diode D. Die Anordnung enthält weiter den Treiber-Widerstand R₁, versorgt vom Trigger U. Der Schalter T2 kann T1 blockieren, bevor dies durch U geschieht. T2 dient zur einstellbaren Leistungs-Regelung in dieser Basis-Version durch Verkürzung der Einschalt-Zeit des Spulen-Stroms über das Zeitglied R₂ - R₃ - C.

Figur 4 zeigt ein zweites Ausführungsbeispiel einer Gleichstrommaschine. Dieses gleicht im wesentlichen dem ersten Ausführungsbeispiel einer Gleichstrommaschine gemäß Figuren 1 bis 3. Der einzige Unterschied besteht darin, dass die Permanentmagnetelemente 6, 7 der ersten und zweiten Gruppe mit ferromagnetischen Feld-Erweiterungselementen 23 ausgestattet sind. Diese dienen der Optimierung des Drehmoment-Verlaufs über der Winkel-Position. Auf die Darstellung der Wicklung wurde in Figur 4 aus Gründen der Übersichtlichkeit verzichtet.

Figur 4a zeigt einen Ausschnitt aus Figur 4. Figur 4b zeigt eine schematische lineare Darstellung. Die Rückseite der Permanentmagnetelemente 9, 10 auf den Magnetträgerabschnitten 6, 7 bauen mit einem fast vollständigen Rückfluss zu den Rändern der Permanentmagnetelemente 9, 10 komplementäre Pole auf. Dieser Rückfluss versucht auf kürzestem Weg die Vorderseite der Permanentmagnetelemente 9, 10 zu erreichen und verteilt sich zu etwa gleichen Teilen auf beide Ränder. Da der magnetische Widerstand der Magnetträgerabschnitte 6, 7 sehr klein gehalten werden kann, entstehen an den Rändern der Permanentmagnetelemente 9, 10 in den Magnetträgerabschnitten 6, 7 kräftige Pole, die in Bewegungs-Richtung der bestromten Spulenelemente auf deren in Bewegungsrichtung vorderen Teil eine anziehende Kraft ausüben und auf den in Bewegungsrichtung hinteren Teil eine Abstoßung. Die Spulenelemente sind aus Gründen der besseren Übersichtlichkeit in den Figuren 4 und 4a nicht dargestellt. Es ist lediglich der Wicklungsträger 15 dargestellt. Der magnetische Fluss der durch die Permanentmagnetelemente erzeugten Magnetfelder schließt sich im Wicklungsträger 15 mit niedriger Permeabilität und erzeugt dort die höchste Feldstärke im Außen-Bereich. Da die parallel zur Bildebene gemäß Darstellung in Figur 4 und 4a verlaufenden Ränder der Permanentmagnetelemente 9, 10 nichts zu dem beschriebenen Effekt beitragen, empfiehlt sich die in Figur 1 gezeigte schmale Form.

Die Existenz von Komplementär-Polen zwischen den Permanentmagnetelementen verstärkt die wünschenswerte magnetische Entkopplung zwischen den Spulenelementen. Zur Optimierung des Drehmoment-Verlaufs über der Winkel-Position kann der Effekt über die in Figur 4 und 4a dargestellten ferromagnetischen Feld-Erweiterungselemente 23 verändert werden. Darüber hinaus kann die in der Zeichnung nicht dargestellte Anordnung von echten Komplementär-Magneten in den Zwischenräumen bei hohem Drehmoment-Bedarf vorteilhaft sein.

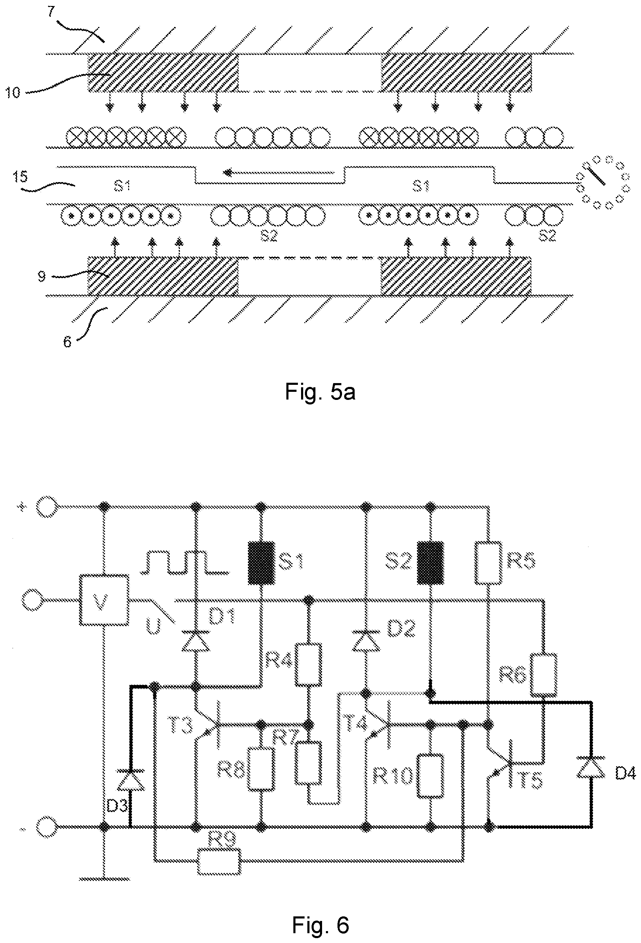

In den Figuren 5 und 6 ist ein drittes Ausführungsbeispiel 50 einer Gleichstrommaschine dargestellt. Sie gleicht im wesentlichen der Gleichstrommaschine 1 gemäß den Figuren 1 bis 3. Die übereinstimmenden Komponenten sind daher mit gleichen Bezugszahlen versehen. Der einzige Unterschied der beiden Gleichstrommaschinen 1 und 50 besteht darin, dass bei der Gleichstrommaschine 50 gemäß Figur 5 und 6 an dem Wicklungsträger 15 zwei Wicklungen 56a und 56b vorgesehen sind, die abwechselnd mit Strom versorgt werden. Die beiden Wicklungen 56a und 56b bilden an dem Wicklungsträger 15 zwei Gruppen von Spulenelementen 57a, 57b aus, die voneinander abgesetzt sind. Dabei befindet sich stets ein Spulenelement 57a der ersten Gruppe zwischen einem Spulenelement 57b der zweiten Gruppe. Die Anzahl der Spulenelemente 57a der ersten Gruppe stimmt mit der Anzahl der Spulenelemente 57b der zweiten Gruppe überein. Diese Anzahl stimmt ferner mit der Anzahl der Permanentmagnetelemente 9 der ersten Gruppe und der Anzahl der Permanentmagnetelemente 10 der zweiten Gruppe überein. In der Zeichnung sind die Spulenelemente 57a zusätzlich mit S₁ gekennzeichnet und die Spulenelemente 57b mit S₂. Figur 5a zeigt eine schematische lineare Darstellung.

Figur 6 zeigt einen Schaltplan der Gleichstrommaschine 50 gemäß Figur 5. Entsprechend der Stellung des Triggers U - offen / geschlossen - werden entweder die Spulenelemente S₁ der ersten Gruppe oder die Spulenelemente S₂ der zweiten Gruppe periodisch nacheinander mit Strom versorgt. Da der Aufbau der Spulenelemente 57a und 57b identisch ist und diese ohne Ferromagnetikum nur eine mäßige Induktivität aufweisen, kann die Umschaltung von S₁ auf S₂ und umgekehrt mit fast spiegelbildlichen Verläufen von Strom und Spannung erfolgen. Damit zeigt die als Motor betriebene Gleichstrommaschine 50 mit dem Schaltplan gemäß Figur 6 am Eingang eine reine Gleichstrom-Aufnahme. Die Verwendung von Freilauf-Dioden wird häufig überflüssig sein.

Wenn der Trigger-Winkel in der Position des maximalen Drehmoments eingestellt ist, liegen die Schaltpunkte dort, wo jeweils eine der beiden Gruppen der Spulenelemente 57a, 57b den Beschleunigungs-Bereich verlässt und gleichzeitig die andere Gruppe der Spulenelemente in den Beschleunigungs-Bereich eintritt.

Der Trigger U erzeugt ein drehzahl-synchrones Signal - ein / aus - von gleichem Winkel-Maß, um die Spulenelemente S₁ und S₂ periodisch zu bestromen. In der Darstellung gemäß Figur 5 sind die Spulenelemente S₂ stromlos. Der ReferenzPunkt der Trigger-Signale sitzt auf dem Magnetträger 5 der Permanentmagnetelemente 9, 10.

In dem Schaltplan gemäß Figur 6 mit geschlossenem Trigger ist Transistor T₃ über den Widerstand R₄ eingeschaltet, und alle Spulenelemente S₁ werden bestromt. Nachdem U geöffnet hat, sperren T₃ und T₅, wodurch T₄ über R₅ eingeschaltet wird, und der Spulen-Strom kann von den Spulenelementen S₂ übernommen werden. Am Kollektor von T₃ erscheint eine induktive Abschalt-Spannung, die bei hoher Symmetrie der Systeme S₁ und S₂ einen nahezu spiegelbildlichen Verlauf der Einschaltspannung der Spulenelemente S₂ auslöst und die resultierende Strom-Aufnahme im Schaltpunkt stabilisiert. Unter solchen optimalen Bedingungen sind zusätzliche Freilauf-Komponenten, wie hier D₁ / D₂ nicht in jedem Fall erforderlich. Der Strom wird störungsfrei von S₂ übernommen und nach Masse geleitet. Mit dem erneuten Schließen von U erfolgt dann die gleiche Kommutierung in Gegenrichtung, von S₂ nach S₁. Die Widerstände R₇, R₈ und R₉ / R₁₀ sind Mitkopplungs-Elemente zur möglichen weiteren Glättung des Schalt-Vorgangs auch bei hohen Drehzahlen.

Durch die dielektrischen Eigenschaften des keramischen Wicklungs-Trägers als Puffer ergibt sich hier ein weiteres Mittel zur Unterdrückung von Störspannungen.

Vorteilhaft für den Betrieb bei niedrigen Betriebsspannungen ist die Parallelschaltung paariger gegenüberliegender Elemente der gleichen Spule. Dadurch sinkt der Eingangswiderstand erheblich bei entsprechender Steigerung des drehmoment-relevanten Stroms und gleichbleibender Länge der aktiven Leiterbahn. Die Verlustleistung in der Spule kann dabei konstant gehalten werden.

Mit steigender Drehzahl bauen sich in den Spulen induktive Spannungen auf, die im Fall von aktivierten Elementen gegen die von außen angelegte Spannung gerichtet sind und damit deren Strom reduzieren. Da aber die bestromten Spulenelemente während der Passage von Permanentmagnetelementen von nicht bestromten Spulenelementen umgeben sind, laufen diese zur gleichen Zeit durch die Komplementär-Felder in den Zwischenräumen der Permanentmagnetelemente. Sie haben die gleiche Geschwindigkeit, die gleiche Wicklungs-Richtung und sind über eine gemeinsame Versorgungs-Leitung niederohmig mit den bestromten Spulenelementen verbunden, aber durch den Spulenstrom-Schalter von der Masse getrennt. Wegen der entgegengesetzten Richtung der Magnetfelder der Permanentmagnetelemente 9, 10 und der zugehörigen Zwischenräume kompensieren sich die induzierten Spannungen in den bestromten und in den unbestromten Spulenelemente größtenteils bei effektiver Rückführung der Permanentfeldflüsse, und der Punkt maximaler mechanischer Leistungs-Abgabe verschiebt sich zu höheren Werten durch Drehzahlsteigerung, da dort die Kompensation der sogenannten Gegen-EMK besonders wirksam wird.

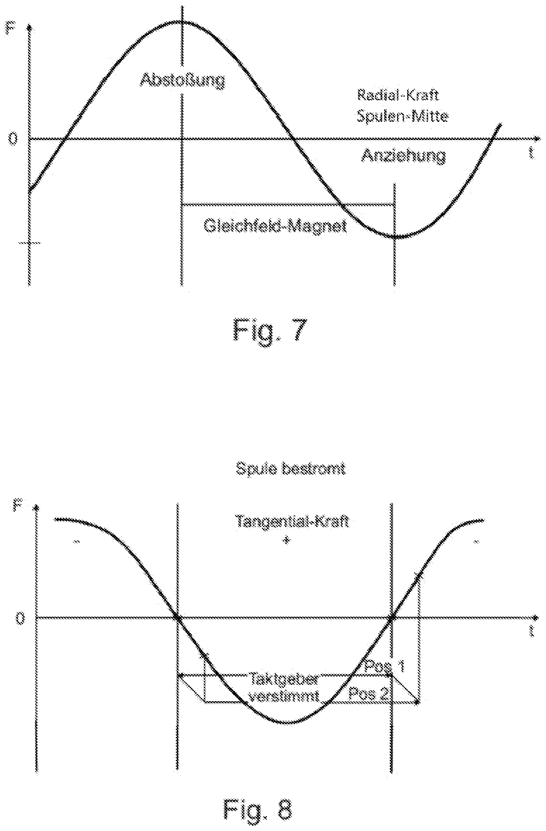

Die Gleichstrommaschine 50 gemäß Figuren 5 und 6 enthält auch das Konzept einer Leistungs-Regelung mit niedrigen Verlusten und weitere funktionale Optionen, die in den Figuren 7 und 8 dargestellt sind.

Im Prinzip beruhen sie auf der periodischen Anordnung der Spulenelemente und der Permanentmagnetelemente mit gleichbreiten Zwischenräumen, deren drehzahlsynchrone Bestromung zusammen mit den magnetischen Eigenschaften der Zwischenräume bei jeder Drehzahl. Wesentlich sind dabei die Möglichkeiten einer gezielten Einstellung der Trigger-Punkte des Spulen-Stroms.

In der Schaltung gemäß Figur 6 wird diese Einstellung oder Verstimmung über V erzeugt und an U weitergegeben. Sie bewirkt hier eine leichte Veränderung der Spulen-Schaltwinkel gegenüber den im Stator festgelegten Positionen maximalen Drehmoments. Da diese Effekte ausschließlich auf induktiver Interaktion beruhen, führen Eingriffe in die Trigger-Winkel Position primär zur Anpassung der Strom-Aufnahme und damit zu einer leistungs-angepassten Reaktion. Die Fähigkeit, durch die Einstellung eines einfachen Triggers das Verhalten der Maschine wesentlich zu beeinflussen, erweist sich als vorteilhaft.

In Figur 7 ist die auf den Rotor der Gleichstrommaschine gemäß Figur 1 wirkende Kraft in Abhängigkeit von der Zeit dargestellt. In der Darstellung ist zwischen der abstoßenden Kraft F > 0 und der anziehenden Kraft F < 0 unterschieden. Ferner ist in dem Schaubild ein Permanentmagnetelement dargestellt, welches als Gleichfeld-Magnet bezeichnet ist. Die Mitte eines Spulenelements ist in Figur 7 als Spulen-Mitte bezeichnet.

Figur 7 und Figur 8 zeigen die Möglichkeiten einer Einstellung des Spulen-Stroms Triggers als nahezu verlust-leistungslose Funktions-Vorgabe. Figur 7 zeigt die Bereiche zirkularer Abstoßung und Anziehung über einem Winkel-Bereich von zwei Spulen-Einheiten mit der Beschleunigungs-Phase (negative Steigung) in der Mitte. Die Übergänge sind weich, trotz konstanter Strom-Aufnahme, wegen der Stetigkeit der Veränderung des Magnetfeldes der Permanentmagnetelemente auf die Spulenelemente. Der Darstellung der Tangential-Kraft in Figur 7 kann auch die Größe und das Vorzeichen der Steigung an einem beliebigen Punkt der Kurve entnommen werden.

Figur 8 zeigt die Verteilung der Tangential-Kraft bei bestromten Spulenelementen entsprechend der positiven und der negativen Steigung der Kurve in Figur 7. Da diese zumindest Ähnlichkeit mit einer Sinus-Funktion aufweist, ähnelt die tangentialkraft-erzeugende Ableitung erwartungsgemäß einer winkel-identischen Kosinus-Funktion. Zur Vereinfachung wird hier der Fall einer Motor-Anwendung betrachtet mit nur einem aktivierten Spulenelement in der Mitte der Kurve in Figur 7, das sich unter Antrieb von links nach rechts bewegt. Die Maximal-Kraft entsteht wenn sich die Position des aktivierten Spulenelements etwa in radialer Richtung mit der Position zweier Permanentmagnetelemente deckt, wobei sich ein Permanentmagnetelement der ersten Gruppe an der der Rotationsachse zugewandten Seite des Spulenelements und ein Permanentmagnetelement der zweiten Gruppe an der der Rotationsachse abgewandten Seite des Spulenelements befindet. Bewegt sich das Spulenelement aus dieser Position heraus, sinkt wegen der abnehmenden Überlappung mit den Permanentmagnetelementen und der damit abnehmenden Feldstärke der mit den Permanentmagneten erzeugten Magnetfeldern die in tangentialer Richtung wirkende Kraft trotz konstanter Bestromung. Erreicht die Mitte dieses Spulenelements das Ende der beiden Permanentmagnetelemente der ersten und zweiten Gruppe, verschwindet die Kraft, wie auch der Null-Durchgang der Kurve in Figur 8 zeigt. Wenn jetzt der konstante Einschalt-Winkel des Spulen-Triggers, wie in Figur 8 z.B. ein wenig nach rechts verschoben wird, erfolgt das Einschalten des Spulen-Stroms verzögert und der Energie-Transfer ist reduziert. Auf der rechten Seite ist die Abschaltung verzögert, und die Spulen-Bestromung reicht etwas in den Bremsbereich hinein. Dabei reagiert das System dort wie ein Generator und schickt etwas Energie zurück in den Versorgungs-Anschluss. Die mechanische Leistung wird reduziert, aber auch die aufgenommene elektrische Leistung durch Erhöhung des Eingangs-Widerstandes.

Diese Anwendung der Trigger-Einstellung ist nur eine von mehreren Möglichkeiten. Darüber hinaus besteht die Möglichkeit, anhand des Triggers die Drehrichtung des Rotors zu ändern. Strikte Voraussetzung dieser einfachen Lösung ist aber der nicht korrektur-bedürftige Lauf bei hohen Drehzahlen.

Figur 9 zeigt einen Schaltplan einer Gleichstrommaschine, welche als Generator betrieben wird, insbesondere zum Laden einer Batterie. Die als Generator betriebene Gleichstrommaschine weist folgende Vorteile auf:
Vermeidung von Hysterese-Verlusten, Vermeidung von Wirbelstrom-Verlusten, Verwertung der Gegen-Induktion, Doppelspulen-Kommutierung, Wicklungs-Kühlung, eisenfreie Spulenfluss-Erzeugung, einfache Funktions-Vorgabe, verlustarme Leistungs-Regelung, Vermeidung magnetischer Sättigung, hohe Drehzahl, reiner Gleichstrom-Betrieb.

Figur 9 zeigt eine prinzipielle Anordnung, die alle generator-spezifischen Merkmale mit geringem schaltungs-technischen Zusatz-Aufwand enthält. Die entsprechende Gleichstrommaschine ermöglicht das Laden einer Batterie auf einen außentemperatur-abhängigen Sollwert der Spannung mit regelbarer Lade-Leistung. Der Rotor der Gleichstrommaschine wird angetrieben durch ein externes Drehmoment. Aufgrund der Lorentz-Kraft wirkt auf die beweglichen Ladungsträger in der Wicklung, welche die Spulenelemente S₁ und S₂ erzeugt, eine Kraft und es fließt ein Strom. Mit diesem Strom wird die Batterie aufgeladen. Die Permanentmagnetelemente sind in entgegen gesetzten Richtungen in radialer Richtung polarisiert. Entsprechend weisen die Magnetfelder der Permanentmagnetelemente in entgegengesetzte Richtungen. Eine in den Spulenelementen induzierte Spannung weist eine unterschiedliche Polarität auf. Alle Spulenelemente tragen zum Laden der Batterie bei.

Die von der Gleichstrommaschine erzeugte Spannung ist bevorzugt deutlich höher, als die Spannung der Batterie im vollständig aufgeladenen Zustand. In diesem Fall muss über den mechanischen Antrieb eine hinreichende Leistung geliefert werden. Kriterium ist ein Strom vom Generator zur Batterie. Zu Beginn des Lade-Vorgangs sollte der Trigger aus einer Position mit niedrigem GegenMoment in Richtung Maximum hochgefahren werden, bis Strom zur Batterie fließt. Dieser sollte als Eingangsgröße die Trigger-Stellung regeln. Erfolgt kein Stromfluss, kann auch nicht geladen werden.

Hochwertige Batterie-Ladesysteme benötigen üblicherweise eine genaue Ladespannung mit einem definierten Temperatur-Koeffizienten.

Figur 9 zeigt die Basis-Anordnung einer als Generator betriebenen Gleichstrommaschine nach dem vorgeschlagenen Grund-Konzept. Eine spannungs-begrenzende Schaltung B mit der gewünschten TemperaturCharakteristik aktiviert die Komponente V, deren drehzahl-synchroner Eingangs-Trigger U die Position maximaler Lade-Leistung festlegt. V sorgt über die Verstimmung der Trigger-Winkel für die gewünschte Lade-Leistung mit den Schalt-Ausgängen zur Aktivierung der Spulenelemente S₁ und S₂. Dabei kann V kontinuierlich geringe Teile des Ladestroms so in die Spulen zurückleiten, dass ein Gegen-Antrieb entsteht, der den Haupt-Antrieb entlastet, und so die eingespeiste mechanische Leistung der Lade-Leistung anpasst.

Von hier aus ergeben sich dann auch weiterführende Konzepte, Motor und Generator als einheitliche Hardware zu realisieren; z.B. bei Elektro-Fahrzeugen mit hoher Rekuperations-Rate.

Ein geeigneter Einstieg in die Doppelfunktion Motor/Generator ist bereits aus Figur 6 herzuleiten. Dies beruht auf der Tatsache, dass hier die Vorgaben des elektrodynamischen Elementargesetzes leicht zu erfüllen sind.

Im dargestellten Fall der Motorversion bewegt sich ein Strom von Ladungsträgern senkrecht zu einem magnetischen Gleichfeld und erzeugt damit nach der rechten Handregel eine zum Strom und dem Magnetfeld senkrechte Antriebskraft.

Das Drehmoment des Gleichstrommotors entsteht als Wechselwirkung zwischen den Leiterbahnen und den Primär-Feldern der Magnete. Spulen, die sich über die Komplementär-Felder bewegen, werden stromlos geschaltet. Dieser Vorgang erfolgt über eine Trigger-Schaltung, die gegenüber den Spulen-Positionen variabel betrieben werden kann.

Die Umschaltung auf Generator-Betrieb erfolgt über eine Verstellung der Trigger-Position um eine Spulen-Einheit. Dadurch wird die Richtung der Antriebskraft gedreht und der Rotor abgebremst. Dieser Übergang Motor/Generator kann bei entsprechender Betätigung des Triggers auch weich erfolgen.

Der stabile Endzustand des Generatorbetriebs ist dadurch gekennzeichnet, dass wegen der Trigger Verschiebung bei positiver induzierter Spulen-Spannung am Transistor-Kollektor jeweils die Transistoren T3 und T4 sperren, aber gleichzeitig über die gleichfalls vorhandenen Dioden D1 und D2 Ladestrom in die Versorgungsleitung fließt. Die Basisversuche hierzu sind aus dem Stand der Technik bekannt (Physik Ein Lehrbuch, Wilhelm H. Westphal).

Die neben diesen Spulenelementen befindliche Spulenelemente mit induziertem negativem Potential können über parallel zu den Transistoren angeordneten Invers-Dioden D3 und D4 mit Masse-Anschluss an den Anoden je nach Stärke des Komplementärfeldes gleichzeitig Strom in die Versorgungsleitung führen.

Der resultierende Gesamtstrom entsteht bereits bei üblichen Drehzahlen wegen der enormen Anzahl beweglicher Ladungsträger in den kompakten Wicklungen der Spulen.

Sämtliche Merkmale der Erfindung können sowohl einzeln als auch in beliebiger Kombination miteinander erfindungswesentlich sein.

### Bezugszahlen

- 1: Gleichstrommaschine
- 2: Stator
- 3: Rotor
- 4: Rotationsachse
- 5: Magnetträger
- 6: Magnetträgerabschnitt
- 7: Magnetträgerabschnitt
- 8: Statorabschnitt
- 9: Permanentmagnetelement der ersten Gruppe
- 10: Permanentmagnetelement der zweiten Gruppe
- 11: Öffnung
- 12: Lager
- 13: Antriebsachse
- 14: Rotorträger
- 15: Wicklungsträger
- 16: Wicklung
- 17: Spulenelement
- 18: Kontaktring
- 18a: Kontaktring
- 19: Rollkontakt
- 19a: Stift
- 20: Versorgungsmodul
- 21: Elektrisch leitender Sektor
- 22: Elektrisch nicht leitender Sektor
- 23: Feld-Erweiterungselement
- 50: Gleichstrommaschine
- 56a: Wicklung
- 56b: Wicklung
- 57a: Spulenelement
- 57b: Spulenelement

## Patentansprüche

1. Gleichstrommaschine
mit einer Rotationsachse (4) der Gleichstrommaschine,
mit einem um die Rotationsachse (4) drehbaren Rotor (3),
mit einem koaxial zum Rotor (3) angeordneten Stator (2),
mit einem zylindrischen, zentrisch zur Rotationsachse (4) angeordneten, aus einem elektrisch isolierenden und ferromagnetisch inaktiven Material bestehenden Wicklungsträger (15), mit mindestens einer ersten Wicklung (16, 56a) eines ersten elektrischen Leiters, wobei die erste Wicklung (16, 56a) an dem Wicklungsträger (16, 56a) mehrere Spulenelemente (17, 57a) ausbildet, welche in Umfangsrichtung des Wicklungsträgers (15) voneinander abgesetzt sind, wobei jedes Spulenelement (17, 57a) aus entlang der Oberfläche des Wicklungsträgers (15) nebeneinander liegenden Leitungszügen des ersten Leiters besteht,
mit einer ersten Gruppe von Permanentmagnetelementen (9), welche bezogen auf die Rotationsachse (4) in radialer Richtung polarisiert sind, wobei die Permanentmagnetelemente (9) in einem um die Rotationsachse (4) zentrischen ersten Ring mit Radius r₁ angeordnet sind,
wobei die Permanentmagnetelemente (9) der ersten Gruppe relativ zueinander unbeweglich angeordnet sind,
mit einer zweiten Gruppe von Permanentmagnetelementen (10), welche bezogen auf die Rotationsachse (4) radial polarisiert sind, wobei die Permanentmagnetelemente (10) der zweiten Gruppe in einem um die Rotationsachse (4) zentrischen zweiten Ring mit Radius r₂ > r₁ angeordnet sind, wobei die Permanentmagnetelemente (9, 10) der ersten Gruppe und der zweiten Gruppe relativ zueinander unbeweglich angeordnet sind, und wobei der Wicklungsträger (15) mit der ersten Wicklung (16, 56a) zwischen dem ersten Ring der ersten Gruppe der Permanentmagnetelemente (9) und dem zweiten Ring der zweiten Gruppe der Permanentmagnetelemente (10) angeordnet ist, derart, dass sich der erste Ring der Permanentmagnetelemente (9) der ersten Gruppe innerhalb des Wicklungsträgers (15) befindet und der zweite Ring der Permanentmagnetelemente (10) der zweiten Gruppe außerhalb des Wicklungsträgers (15) und der Wicklungsträger (15) mit der ersten Wicklung (16, 56a) relativ zu den Permanentmagnetelementen (9, 10) drehbar ist,
wobei der Stator (2) die Permanentmagnetelemente (9) umfasst und der Rotor (3) den Wicklungsträger (15) mit der ersten Wicklung (16, 56a), oder wobei der Stator (2) den Wicklungsträger (15) mit der ersten Wicklung (16, 56a) umfasst und der Rotor (3) die Permanentmagnetelemente (9) wobei sich je ein Permanentmagnetelement (9) der ersten Gruppe und ein Permanentmagnetelement (10) der zweiten Gruppe in radialer Richtung derart gegenüber liegen, dass das Permanentmagnetelement (9) der ersten Gruppe innerhalb des Wicklungsträgers (15) und das diesem Permanentmagnetelement (9) der ersten Gruppe gegenüberliegende Permanentmagnetelement (10) der zweiten Gruppe außerhalb des Wicklungsträgers (15) angeordnet ist und beide Permanentmagnetelemente (9, 10) das gleiche Winkelsegment abdecken, wobei die Anzahl n der Permanentmagnetelemente (9) der ersten Gruppe mit der Anzahl m der Permanentmagnete (10) der zweiten Gruppe übereinstimmt und dass die Permanentmagnetelemente (9) der ersten Gruppe relativ zu den Permanentmagnetelementen (10) der zweiten Gruppe derart angeordnet sind, dass sich in jedem Winkelsegment 360°/ 2n bezogen auf die Rotationsachse je ein Permanentmagnetelement (9) der ersten Gruppe und je ein Permanentmagnetelement (10) der zweiten Gruppe befinden,
wobei die Anzahl der voneinander abgesetzten Spulenelemente (17, 57a) der ersten Wicklung mit der Anzahl n der Permanentmagnetelemente (9) der ersten Gruppe übereinstimmt und dass sich jedes der Spulenelemente (17, 57a) über ein Winkelsegment bezogen auf die Rotationsachse (4) erstreckt, welches kleiner oder gleich ist 360°/2n ist,
**dadurch gekennzeichnet, dass**
die erste Gruppe eine Anzahl n an Permanentmagnetelementen (9) umfasst, und sich jedes der n Permanentmagnetelemente (9) über ein Winkelsegment 360°/2n erstreckt, und der Winkelabstand zwischen je zwei benachbarten Permanentmagnetelementen (9) der ersten Gruppe 360°/2n beträgt.

2. Gleichstrommaschine nach Anspruch 1, **dadurch gekennzeichnet, dass** alle Permanentmagnetelemente (9) der ersten Gruppe die gleiche Form, Größe und Magnetisierung aufweisen, und dass die Permanentmagnetelemente (9) der ersten Gruppe äquidistant angeordnet sind, derart dass der Winkelabstand zwischen je zwei benachbarten Permanentmagnetelementen (9) der ersten Gruppe gleich ist.

3. Gleichstrommaschine nach einem der vorhergehenden Ansprüche, **dadurch gekennzeichnet, dass** die Permanentmagnetelemente (9) der ersten Gruppe in radialer Richtung umgekehrt polarisiert sind wie die Permanentmagnetelemente (10) der zweiten Gruppe.

4. Gleichstrommaschine nach einem der vorhergehenden Ansprüche, **dadurch gekennzeichnet, dass** alle Permanentmagnetelemente (10) der zweiten Gruppe gleich groß sind, und dass die Permanentmagnetelemente (10) der zweiten Gruppe äquidistant angeordnet sind, derart dass der Winkelabstand zwischen je zwei benachbarten Permanentmagnetelementen (10) der zweiten Gruppe gleich ist.

5. Gleichstrommaschine nach Anspruch 4, **dadurch gekennzeichnet, dass** alle m=n Permanentmagnetelemente (10) der zweiten Gruppe sich jeweils über ein Winkelsegment 360°/2m erstrecken, und dass der Winkelabstand zwischen je zwei benachbarten Permanentmagnetelementen (10) der zweiten Gruppe 360°/2m beträgt.

6. Gleichstrommaschine nach einem der vorhergehenden Ansprüche, **dadurch gekennzeichnet, dass** sie mit einer Schalteinrichtung ausgestattet ist, welche den ersten Leiter der ersten Wicklung (16, 56a) periodisch abwechselnd mit Strom versorgt und stromlos schaltet.

7. Gleichstrommaschine nach Anspruch 6, **dadurch gekennzeichnet, dass** die Periodenlänge P = T₁ + T₂ vorgegeben ist, wobei das Zeitintervall T₁, in welchem der erste Leiter mit Strom versorgt wird und das Zeitintervall T₂, in welchem der erste Leiter stromlos geschaltet ist, gleich lang sind.

8. Gleichstrommaschine nach Anspruch 7, **dadurch gekennzeichnet, dass** die Schalteinrichtung mit einem Geber ausgestattet ist, der eine Position des Wicklungsträgers (15) relativ zu den Permanentmagnetelementen (9, 10) erfasst, und dass die Schalteinrichtung ausgestattet ist, den Strom ein- oder auszuschalten in Abhängigkeit der durch den Geber erfassten Position des Wicklungsträgers (15).

9. Gleichstrommaschine nach einem der vorhergehenden Ansprüche, **dadurch gekennzeichnet, dass** an dem Wicklungsträger (15) eine zweite Wicklung (56b) eines zweiten elektrischen Leiters angeordnet ist, dass die zweite Wicklung (56b) an dem Wicklungsträger (15) mehrere zweite voneinander abgesetzte Spulenelemente (57b) ausbildet, und dass zwischen je zwei ersten Spulenelementen (57a) der ersten Wicklung (56a) ein zweites Spulenelement (57b) der zweiten Wicklung (56b) am Wicklungsträger (15) angeordnet ist.

10. Gleichstrommaschine nach Anspruch 9, **dadurch gekennzeichnet, dass** die erste Wicklung und die zweite Wicklung in derselben Richtung um den Wicklungsträger gewickelt sind.

11. Gleichstrommaschine nach Anspruch 6 und nach Anspruch 9 oder 10, **dadurch gekennzeichnet, dass** die Schalteinrichtung abwechselnd den ersten Leiter und den zweiten Leiter mit Strom versorgt, derart, dass der erste Leiter mit Strom versorgt ist, während der zweite Leiter stromlos ist und dass der zweite Leiter mit Strom versorgt ist, während der erste Leiter stromlos ist.

12. Gleichstrommaschine nach Anspruch 11, **dadurch gekennzeichnet, dass** die Periodenlänge P = T1 + T2 vorgegeben ist, wobei das Zeitintervall T1, in welchem der erste Leiter mit Strom versorgt ist und der zweite Leiter stromlos ist, und das Zeitintervall T2, in welchem der erste Leiter stromlos geschaltet ist und der zweite Leiter mit Strom versorgt ist, gleich lang sind.

13. Gleichstrommaschine nach einem der Ansprüche 9 bis 12, **dadurch gekennzeichnet, dass** die Anzahl a=n der Spulenelemente (57a) der ersten Wicklung (56a) und die Anzahl b der Spulenelemente (57b) der zweiten Wicklung (56b) gleich groß ist, und dass sich alle Spulenelemente (57a) der ersten Wicklung (56a) und alle Spulenelemente (57b) der zweiten Wicklung (56b) über ein gleich großes Winkelsegment β erstrecken.

14. Gleichstrommaschine nach Anspruch 13, **dadurch gekennzeichnet, dass** sich jedes erste Spulenelement (57a) der ersten Wicklung (56a) und jedes zweite Spulenelement (57b) der zweiten Wicklung (56b) über ein Winkelsegment erstreckt, welches kleiner oder gleich 360°/2a ist.

15. Gleichstrommaschine nach einem der vorhergehenden Ansprüche, **dadurch gekennzeichnet, dass** der Abstand zwischen je zwei benachbarten Spulenelementen (17, 57a, 57b) gleich groß ist.

16. Gleichstrommaschine nach einem der vorhergehenden Ansprüche, **dadurch gekennzeichnet, dass** die Windungen der ersten und/ oder zweiten Wicklung (16, 56a, 56b) im wesentlichen in radialen Ebenen relativ zur Rotationsachse (4) verlaufen.

17. Gleichstrommaschine nach einem der vorhergehenden Ansprüche, **dadurch gekennzeichnet, dass** der Wicklungsträger (15) aus einem dielektrischen Material besteht.

18. Gleichstrommaschine nach einem der vorhergehenden Ansprüche, **dadurch gekennzeichnet, dass** der Wicklungsträger (15) aus Keramik besteht.

19. Gleichstrommaschine nach einem der vorhergehenden Ansprüche, **dadurch gekennzeichnet, dass** die Permanentmagnetelemente (9, 10) auf einem Magnetträger (5, 6, 7) angeordnet sind, und dass der Magnetträger (5, 6, 7) aus einem ferromagnetischen Material besteht.

## Claims

1. DC current machine
with an axis of rotation (4) of the DC current machine,
with a rotor (3) that can rotate about the axis of rotation (4),
with a stator (2) arranged coaxially relative to the rotor (3),
with a cylindrical winding carrier (15) arranged centred relative to the axis of rotation (4), consisting of an electrically insulating and ferromagnetically inactive material, having at least one first winding (16, 56a) of a first electrical conductor, wherein the first winding (16, 56a) on the winding carrier (16, 56a) comprises several coil elements (17, 57a), which are set apart from one another in the circumferential direction of the winding carrier (15), wherein each coil element (17, 57a) is made of line sections from the first conductor lying adjacent to one another along the surface of the winding carrier (15),
with a first group of permanent magnet elements (9), which are polarised in the radial direction relative to the axis of rotation (4), wherein the permanent magnet elements (9) are arranged in a first ring with radius r₁ centred around the axis of rotation (4),
wherein the permanent magnet elements (9) of the first group are arranged immovably relative to one another,
with a second group of permanent magnet elements (10), which are polarised radially relative to the axis of rotation (4), wherein the permanent magnet elements (10) of the second group are arranged in a second ring with radius r₂ > r₁ centred around the axis of rotation (4), wherein the permanent magnet elements (9, 10) of the first group and the second group are arranged immovably relative to one another, and wherein the winding carrier (15) is arranged with the first winding (16, 56a) between the first ring of the first group of permanent magnet elements (9) and the second ring of the second group of permanent magnet elements (10), such that the first ring of the permanent magnet elements (9) of the first group is within the winding carrier (15) and the second ring of the permanent magnet elements (10) of the second group is outside the winding carrier (15) and the winding carrier (15) can be turned with the first winding (16, 56a) relative to the permanent magnet elements (9, 10), wherein the stator (2) comprises the permanent magnet elements (9) and the rotor (3) comprises the winding carrier (15) with the first winding (16, 56a), or wherein the stator (2) comprises the winding carrier (15) with the first winding (16, 56a) and the rotor (3) comprises the permanent magnet elements (9),
wherein one permanent magnet element (9) of the first group and one permanent magnet element (10) of the second group are opposite one another other in the radial direction such that the permanent magnet element (9) of the first group is arranged within the winding carrier (15) and the permanent magnet element (10) of the second group opposite this permanent magnet element (9) of the first group is arranged outside the winding carrier (15) and both permanent magnet elements (9, 10) cover the same angular segment,
wherein the number n of the permanent magnet elements (9) of the first group is the same as the number m of the permanent magnets (10) of the second group and the permanent magnet elements (9) of the first group are arranged relative to the permanent magnet elements (10) of the second group such that in every angular segment 360°/2n relative to the axis of rotation there is one permanent magnet element (9) of the first group and one permanent magnet element (10) of the second group, wherein the number of set apart coil elements (17, 57a) of the first winding is the same as the number n of the permanent magnet elements (9) of the first group and each of the coil elements (17, 57a) extends across an angular segment relative to the axis of rotation (4) that is smaller or equal to 360°/2n,
**characterised in that**
the first group comprises a number n of permanent magnet elements (9) and each of the n permanent magnet elements (9) extends over an angular segment 360°/2n, and the angular distance between any two adjacent permanent magnet elements (9) of the first group is 360°/2n.

2. DC current machine according to claim 1, **characterised in that** all permanent magnet elements (9) of the first group have the same shape, size and magnetisation and that the permanent magnet elements (9) of the first group are arranged equidistantly such that the angular distance between any two adjacent permanent magnet elements (9) of the first group is the same.

3. DC current machine according to one of the previous claims, **characterised in that** the permanent magnet elements (9) of the first group are polarised inversely in the radial direction to the permanent magnet elements (10) of the second group.

4. DC current machine according to one of the previous claims, **characterised in that** all permanent magnet elements (10) of the second group have the same size and that the permanent magnet elements (10) of the second group are arranged equidistantly such that the angular distance between any two adjacent permanent magnet elements (10) of the second group is the same.

5. DC current machine according to claim 4, **characterised in that** all m = n permanent magnet elements (10) of the second group each extend over an angular segment 360°/2n, and that the angular distance between any two adjacent permanent magnet elements (10) of the second group is 360°/2m.

6. DC current machine according to one of the previous claims, **characterised in that** it is provided with a switching mechanism that periodically alternates between supplying the first conductor of the first winding (16, 56a) with current and de-energising it.

7. DC current machine according to claim 6, **characterised in that** the period length P = T₁ + T₂ is predetermined, wherein the time interval T₁ in which the first conductor is supplied with current and the time interval T₂ in which the first conductor is de-energised are the same length.

8. DC current machine according to claim 7, **characterised in that** the switching mechanism is provided with a transmitter that detects a position of the winding carrier (15) relative to the permanent magnet elements (9, 10) and that the switching mechanism is provided to switch the current on or off depending on the position of the winding carrier (15) detected by the transmitter.

9. DC current machine according to one of the previous claims, **characterised in that** a second winding (56b) of a second electrical conductor is arranged on the winding carrier (15), that the second winding (56b) on the winding carrier (15) comprises several second set apart coil elements (57b), and **in that** a second coil element (57b) of the second winding (56b) is arranged on the winding support (15) between each two first coil elements (57a) of the first winding (56a).

10. DC current machine according to claim 9, **characterised in that** the first winding and the second winding are wound in the same direction around the winding carrier.

11. DC current machine according to claim 6 and claim 9 or 10, **characterised in that** the switching mechanism alternately provides the first conductor and the second conductor with current such that the first conductor is supplied with current while the second conductor is de-energised and the second conductor is supplied with current while the first conductor is de-energised.

12. DC current machine according to claim 11, **characterised in that** the period length P = T1 + T2 is predetermined, wherein the time interval T1 in which the first conductor is supplied with current and the second conductor is de-energised and the time interval T2 in which the first conductor is de-energised and the second conductor is supplied with current are the same length.

13. DC current machine according to one of the claims 9 to 12, **characterised in that** the number a = n of coil elements (57a) of the first winding (56a) and the number b of coil elements (57b) of the second winding (56b) is the same, and that all coil elements (57a) of the first winding (56a) and all coil elements (57b) of the second winding (56b) extend over an equal angular segment β.

14. DC current machine according to claim 13, **characterised in that** each first coil element (57a) of the first winding (56a) and each second coil element (57b) of the second winding (56b) extends over an angular segment that is smaller than or equal to 360°/2a.

15. DC current machine according to one of the previous claims, **characterised in that** the distance between any two adjacent coil elements (17, 57a, 57b) is the equal.

16. DC current machine according to one of the previous claims, **characterised in that** the spirals of the first and/or second winding (16, 56a, 56b) essentially run along radial planes relative to the axis of rotation (4).

17. DC current machine according to one of the previous claims, **characterised in that** the winding carrier (15) is made of a dielectric material.

18. DC current machine according to one of the previous claims, **characterised in that** the winding carrier (15) is made of ceramic.

19. DC current machine according to one of the previous claims, **characterised in that** the permanent magnet elements (9, 10) are arranged on a magnet carrier (5, 6, 7) and that the magnet carrier (5, 6, 7) is made of a ferromagnetic material.

## Revendications

1. Machine à courant continu
avec un axe de rotation (4) de la machine à courant continu,
avec un rotor (3) tournant autour de l'axe de rotation (4),
avec un stator (2) disposé coaxialement par rapport au rotor (3),
avec un support d'enroulement (15) constitué d'un matériau inactif du point de vue ferromagnétique et isolant du point de vue électrique, cylindrique et centré par rapport à l'axe de rotation (4), qui comporte au moins un premier enroulement (16, 56a) d'un premier conducteur électrique, le premier enroulement (16, 56a) du support (16, 56a) formant plusieurs éléments de bobine (17, 57a), décalés entre eux dans la direction périphérique du support d'enroulement (15), chaque élément de bobine (17, 57a) étant constitué des lignes juxtaposées du premier conducteur, le long de la surface du support (15),
avec un premier groupe d'éléments magnétiques permanents (9) à polarisation radiale par rapport à l'axe de rotation (4), les éléments magnétiques permanents (9) étant disposés dans un premier anneau (4) à rayon r₁, centré par rapport à l'axe de rotation,
les éléments magnétiques permanents (9) du premier groupe étant disposés de façon fixe entre eux,
avec un deuxième groupe d'éléments magnétiques permanents (10) à polarisation radiale par rapport à l'axe de rotation (4), les éléments magnétiques permanents (10) du deuxième groupe étant disposés dans un deuxième anneau à rayon r₂ > r₁, centré par rapport à l'axe de rotation (4), les éléments magnétiques permanents (9, 10) des premier et deuxième groupes étant positionnés de façon fixe entre eux, et le support d'enroulement (15) avec le premier enroulement (16, 56a) étant placé entre le premier anneau du premier groupe d'éléments magnétiques permanents (9) et le deuxième anneau du deuxième groupe d'éléments magnétiques permanents (10) de telle manière que le premier anneau des éléments magnétiques permanents (9) du premier groupe se trouve à l'intérieur du support d'enroulement (15), que le deuxième anneau des éléments magnétiques permanents (10) du deuxième groupe se situe à l'extérieur du support d'enroulement (15) et que le support d'enroulement (15) avec le premier enroulement (16, 56a) soit rotatif par rapport aux éléments magnétiques permanents (9, 10),
le stator (2) comprenant les éléments magnétiques permanents (9), et le rotor (3), le support d'enroulement (15) avec le premier enroulement (16, 56a), ou bien le stator (2) comprenant le support d'enroulement (15) avec le premier enroulement (16, 56a), et le rotor (3), les éléments magnétiques permanents (9)
un élément magnétique permanent (9) du premier groupe et un élément magnétique permanent (10) du deuxième groupe se faisant radialement face de telle manière que l'élément magnétique permanent (9) du premier groupe se trouve à l'intérieur du support d'enroulement (15), que l'élément magnétique permanent (10) du deuxième groupe, faisant face à cet élément (9) du premier groupe, se trouve à l'extérieur du support d'enroulement (15) et que les deux éléments magnétiques permanents (9, 10) couvrent le même segment d'angle,
le nombre n d'éléments magnétiques permanents (9) du premier groupe concordant avec le nombre m d'aimants permanents (10) du deuxième groupe, et les éléments magnétiques permanents (9) du premier groupe étant disposés par rapport aux éléments magnétiques permanents (10) du deuxième groupe de telle sorte que dans chaque segment d'angle 360°/ 2n rapporté à l'axe de rotation, se trouvent respectivement un élément magnétique permanent (9) du premier groupe et un élément magnétique permanent (10) du deuxième groupe,
le nombre d'éléments de bobine (17, 57a) décalés entre eux du premier enroulement concordant avec le nombre n d'éléments magnétiques permanents (9) du premier groupe, et chaque élément de bobine (17, 57a) s'étendant sur un segment d'angle rapporté à l'axe de rotation (4), qui est inférieur ou égal à 360°/2n,
**caractérisé en ce que**
le premier groupe englobe un nombre n d'éléments magnétiques permanents (9), que chacun des n éléments magnétiques permanents (9) s'étend sur un segment d'angle 360°/2n, et que la distance angulaire entre respectivement deux éléments magnétiques permanents voisins (9) du premier groupe est de 360°/2n.

2. Machine à courant continu selon la revendication 1, **caractérisée en ce que** tous les éléments magnétiques permanents (9) du premier groupe ont les mêmes forme, taille et caractéristiques magnétiques, et que les éléments magnétiques permanents (9) du premier groupe sont disposés de façon équidistante de telle sorte que la distance angulaire entre respectivement deux éléments magnétiques permanents voisins (9) du premier groupe soit la même.

3. Machine à courant continu selon l'une des revendications précédentes, **caractérisée en ce que** la polarisation radiale des éléments magnétiques permanents (9) du premier groupe est inverse à celle des éléments magnétiques permanents (10) du deuxième groupe.

4. Machine à courant continu selon l'une des revendications précédentes, **caractérisée en ce que** tous les éléments magnétiques permanents (10) du deuxième groupe ont la même taille et que les éléments magnétiques permanents (10) du deuxième groupe sont disposés de façon équidistante de telle sorte que la distance angulaire entre respectivement deux éléments magnétiques permanents voisins (10) du deuxième groupe soit la même.

5. Machine à courant continu selon la revendication 4, **caractérisée en ce que** tous les m=n éléments magnétiques permanents (10) du deuxième groupe s'étendent sur un segment d'angle de 360°/2 m et que la distance angulaire entre respectivement deux éléments magnétiques permanents voisins (10) du deuxième groupe est de 360°/2 m.

6. Machine à courant continu selon l'une des revendications précédentes, **caractérisée en ce qu'**elle est équipée d'un dispositif de commutation, qui alimente le premier conducteur du premier enroulement (16, 56a) en courant et coupe cette alimentation de façon alternée pendant une période donnée.

7. Machine à courant continu selon la revendication 6, **caractérisée en ce que** la longueur de période P = T₁ + T₂ est prédéfinie, l'intervalle de temps T₁ pendant lequel le premier conducteur est alimenté en courant étant identique à l'intervalle T₂ pendant lequel le premier conducteur n'est pas alimenté en courant.

8. Machine à courant continu selon la revendication 7, **caractérisée en ce que** le dispositif de commutation est équipé d'un capteur qui détecte la position du support d'enroulement (15) par rapport aux éléments magnétiques permanents (9, 10) et **en ce que** le dispositif de commutation a une fonction permettant d'appliquer ou de couper le courant selon la position du support d'enroulement (15) détectée par le capteur.

9. Machine à courant continu selon l'une des revendications précédentes, **caractérisée en ce que** le support d'enroulement (15) dispose d'un deuxième enroulement (56b) d'un deuxième conducteur électrique, que le deuxième enroulement (56b) forme sur le support d'enroulement (15) plusieurs deuxièmes éléments de bobine décalés entre eux (57b) et qu'entre respectivement les deux premiers éléments de bobine (57a) du premier enroulement (56a), est disposé un deuxième élément de bobine (57b) du deuxième enroulement (56b) sur le support d'enroulement (15).

10. Machine à courant continu selon la revendication 9, **caractérisée en ce que** le premier enroulement et le deuxième enroulement sont enroulés dans le même sens autour du support d'enroulement.

11. Machine à courant continu selon la revendication 6 et la revendication 9 ou 10, **caractérisée en ce que** le dispositif de commutation alimente en alternance le premier conducteur et le deuxième conducteur en courant, de telle façon que le premier conducteur soit alimenté en courant pendant que le deuxième conducteur est sans courant, et que le deuxième conducteur soit alimenté en courant pendant que le premier conducteur est sans courant.

12. Machine à courant continu selon la revendication 11, **caractérisée en ce que** la longueur de période P = T1 + T2 est prédéfinie, l'intervalle de temps T1 pendant lequel le premier conducteur est alimenté en courant et le deuxième conducteur est sans courant, étant identique à l'intervalle T2 pendant lequel le premier conducteur est sans courant et le deuxième conducteur est alimenté en courant.

13. Machine à courant continu selon l'une des revendications 9 à 12, **caractérisée en ce que** le nombre a=n d'éléments de bobine (57a) du premier enroulement (56a) et le nombre b d'éléments de bobine (57b) du deuxième enroulement (56b) sont identiques, et que tous les éléments de bobine (57a) du premier enroulement (56a) et tous les éléments de bobine (57b) du deuxième enroulement (56b) s'étendent sur un segment d'angle β de même taille.

14. Machine à courant continu selon la revendication 13, **caractérisée en ce que** chaque premier élément de bobine (57a) du premier enroulement (56a) et chaque deuxième élément de bobine (57b) du deuxième enroulement (56b) s'étendent sur un segment d'angle inférieur ou égal à 360°/2a.

15. Machine à courant continu selon l'une des revendications précédentes, **caractérisée en ce que** la distance entre respectivement deux éléments de bobine voisins (17, 57a, 57b) est la même.

16. Machine à courant continu selon l'une des revendications précédentes, **caractérisée en ce que** les spires des premier et/ou deuxième enroulements (16, 56a, 56b) se déploient principalement dans la direction radiale par rapport à l'axe de rotation (4).

17. Machine à courant continu selon l'une des revendications précédentes, **caractérisée en ce que** le support d'enroulement (15) est fait d'un matériau diélectrique.

18. Machine à courant continu selon l'une des revendications précédentes, **caractérisée en ce que** le support d'enroulement (15) est constitué de céramique.

19. Machine à courant continu selon l'une des revendications précédentes, **caractérisée en ce que** les éléments magnétiques permanents (9, 10) sont disposés sur un support magnétique (5, 6, 7) et que ce support magnétique (5, 6, 7) est constitué de matériau ferromagnétique.
